# EUROPÄISCHE PATENTSCHRIFT

(11) **EP 2 841 218 B1**
(45) Veröffentlichungstag und Bekanntmachung des Hinweises auf die Patenterteilung: **27.02.2019**
(21) Anmeldenummer: 13719367.8
(22) Anmeldetag: 23.04.2013
(51) Int. Cl.: B21J 5/12, B21K 1/30, B21D 53/28

(54) **VORRICHTUNG UND VERFAHREN ZUR HERSTELLUNG VON MIT EINER INNENLIEGENDEN LAUFRADVERZAHNUNG VERSEHENEN DICKWANDIGEN HOHLRÄDERN**
DEVICE AND METHOD FOR PRODUCING THICK-WALLED RING GEARS PROVIDED WITH INTERNALLY TOOTHED SECTIONS FOR DRIVING PINIONS
DISPOSITIF ET PROCÉDÉ DE FABRICATION DE COURONNES À PAROIS ÉPAISSES POURVUES D'UNE DENTURE INTÉRIEURE DE ROUE DE ROULEMENT

(30) Priorität: 25.04.2012 CH 5692012
(43) Veröffentlichungstag der Anmeldung: 04.03.2015
(73) Patentinhaber: ERNST GROB AG, CH-8708 Männedorf (CH)
(72) Erfinder: RUH, Fabian, CH-8636 Wald (CH); DÉRIAZ, Daniel, CH-8706 Meilen (CH)
(74) Vertreter: Frei Patent Attorneys
(86) Internationale Anmeldenummer: PCT/CH2013/000070
(87) Internationale Veröffentlichungsnummer: WO 2013/159241

(56) Entgegenhaltungen:
- EP-A1- 1 621 269
- WO-A1-2005/075127
- WO-A2-2008/139323
- DE-A1-102009 045 251
- US-A1- 2006 272 375

## Beschreibung

### Technisches Gebiet

Die Erfindung bezieht sich auf das Gebiet der Erzeugung von Laufradverzahnungen von Hohlrädern, insbesondere auf entsprechende Innenverzahnungen. Laufradverzahnungen und insbesondere Evolventenverzahnungen finden Anwendung in Zahnradgetrieben und insbesondere in Planetengetrieben, zum Beispiel in solchen von Automatikgetrieben für Automobile, aber auch in anderen Bereichen des Fahrzeugbaus und des Maschinenbaus.

### Stand der Technik

Innenliegende Laufradverzahnungen werden heute vor allem durch spanabhebende Verfahren erzeugt, insbesondere durch Räumen.

Räumen wird auch zur Erzeugung von Zahnnabenprofilen wie Innenverzahnungen nach DIN 5480, DIN 5482, usw. eingesetzt.

Wenn durch Räumen topfförmig ausgebildete Werkstücke mit einer Laufradverzahnung erstellt werden sollen, muss zunächst in einem der Topfwandung entsprechenden Teil die Laufradverzahnung erstellt und danach dieser Teil mit einem Topfbodenteil verbunden werden, beispielsweise durch Laser- oder Elektronenstrahlschweissen.

Wenn in einem topfförmig ausgebildeten Werkstück eine Laufradverzahnung spanabhebend erzeugt werden soll, kommt das Stossen zur Anwendung, welches gegenüber dem Räumen jedoch eine geringere Wirtschaftlichkeit aufweist.

Für mechanisch wenig belastete Teile ist das Herstellen von innenverzahnten Hohlrädern durch Sintern eine Alternative, die es ausserdem erlaubt, topfförmig ausgebildete Hohlräder einstückig auszubilden, ohne dass ein anschliessender Verbindungsschritt für Topfboden und Wandung durchgeführt werden müsste.

Es ist wünschenswert, ein alternatives Verfahren zur Herstellung von innenliegenden Laufradverzahnungen zu schaffen.

Zur Erstellung von innenliegenden Steckverzahnungen sind auch kaltumformende Verfahren bekannt, bei denen in ein hohlzylindrisches Werkstück ein aussenprofilierter Dorn eingebracht wird und dann eine der Profilierung des Dornes entsprechende Innenprofilierung des Werkstückes dadurch erzeugt wird, dass das Werkstück von aussen durch Schlagwalzen mittels planetenartig angetriebener und periodisch auf das Werkstück einwirkender unprofilierter Werkzeuge bearbeitet wird. Solche Verfahren sind beispielsweise aus DE 37 15 393 C2, CH 670 970 A5, CH 675 840 A5, CH 685 542 A5 und EP 0 688 617 B1 bekannt.

Eine Erstellung von innenliegenden Laufradverzahnungen durch Kaltumformung ist nur schwer zu realisieren, da Laufradverzahnungen, zumindest im Vergleich mit Steckverzahnungen wesentlich grössere Zahnhöhen aufweisen und ausserdem im allgemeinen höhere Genauigkeitsanforderungen stellen.

Ein Verfahren zum Erstellen einer Innen- und Aussenprofilierung in dünnwandigen zylindrischen Hohlteilen ist in WO 2007/009267 A1 beschrieben. Das dünnwandige Hohlteil sitzt auf einem aussenprofilierten Dorn und wird durch mindestens ein von aussen auf das Hohlteil schlagartig einwirkendes Profilierungswerkzeug kaltumformend bearbeitet. Dabei wird das Profilierungswerkzeug senkrecht zur Oberfläche, also radial, bewegt und das Hohlteil relativ gegenüber dem Profilierungswerkzeug bei gleichbleibender radialer Zustelltiefe axial verschoben. Durch dieses Verfahren kann die durch den profilierten Dorn vorgegebene Profilierung auf die Innenverzahnnung und die entsprechende Aussenverzahnung des dünnwandigen Hohlteils übertragen werden. Zur Erstellung einer innenliegenden Laufradverzahnung ist das Verfahren völlig ungeeignet, da es nur bei dünnwandigen Blechteilen angewendet werden kann, wodurch weder eine ausreichende Genauigkeit noch eine ausreichende Belastbarkeit erreichbar ist.

In WO 2005/075127 A1 ist ein Verfahren und eine Vorrichtung zur Erzeugung von Profilierungen von zylindrischen Werkstücken offenbart, bei dem zwei gleichartige und durch separate Werkzeughalter gehalterte Werkzeuge ein Werkstück durch synchroniserte spiegelsymmetrisch radial verlaufende Bewegungen von aussen bearbeiten.

DE 10 2009 045251 A1 offenbart ein Verfahren und eine Vorrichtung zum Formen eines Bauteils mittels Fliessformens einer Innenfläche eines Vorformlingzylinders.

In EP 1 624 269 A1 sowie in US 2006/0272375 A1 wie auch in WO 2008/139323 A2 wird eine Innenverzahnung erzeugt, indem ein mit einer Aussenverzahnung versehenes Werkzeug gegen die Innenseite eines zu bearbeitenden Zylinders gepresst wird, während das Werkzeug um die eigene Achse rotiert.

### Darstellung der Erfindung

Es ist eine Aufgabe der Erfindung, ein alternatives Verfahren zu schaffen, durch das innenliegende Laufradverzahnungen erzeugbar sind. Weiter sollen eine Vorrichtung zur Erzeugung innenliegender Laufradverzahnungen und eine Verwendung der Vorrichtung geschaffen werden sowie ein Getriebe, das ein Hohlrad mit einer innenliegenden Laufradverzahnung versehen ist.

Eine weitere Aufgabe der Erfindung ist, eine Möglichkeit zu schaffen, innenliegende Laufradverzahnungen mit hoher Präzision zu erzeugen.

Eine weitere Aufgabe der Erfindung ist, eine Möglichkeit zu schaffen, mit grosser Effizienz innenliegende Laufradverzahnungen zu erzeugen, also kurze Bearbeitungszeiten bei der Erzeugung innenliegender Laufradverzahnungen zu erreichen.

Eine weitere Aufgabe der Erfindung ist, eine Möglichkeit zu schaffen, innenliegende Laufradverzahnungen mit grossen Verzahnungstiefen zu erzeugen. Laufradverzahnungen mit schlanken Zähnen sollen erzeugbar sein, insbesondere Hochverzahnungen, bei denen die Verzahnungstiefe der Laufradverzahnung mindestents 2.2 mal so gross ist wie der Modul der Laufradverzahnung.

Eine weitere Aufgabe der Erfindung ist, eine Möglichkeit zu schaffen, innenliegende Laufradverzahnungen in Hohlrädern mit grossen Restwandstärken zu erzeugen.

Eine weitere Aufgabe der Erfindung ist, eine Möglichkeit zu schaffen, innenliegende Laufradverzahnungen in topfförmig ausgebildeten Hohlrädern zu erzeugen, insbesondere unter Sicherstellung einer präzisen Ausrichtung des Topfbodens gegenüber der Verzahnung.

Eine weitere Aufgabe der Erfindung ist, eine Möglichkeit zu schaffen, innenliegende Laufrad-Schrägverzahnungen zu erzeugen.

Eine weitere Aufgabe der Erfindung ist, Getriebe zu schaffen, die mindestens ein Hohlrad mit einer innenliegenden Laufradverzahnung aufweisen, wobei die Laufradverzahnung besonders gut oder effizient herstellbar oder von besonders hoher Präzision sein soll.

Mindestens eine dieser Aufgaben wird zumindest teilweise durch eine Vorrichtung, ein Verfahren und eine Verwendung gemäss den Patentansprüchen gelöst. Das Verfahren zur Herstellung eines mit einer innenliegenden Laufradverzahnung versehenen Hohlrades beinhaltet, dass ein Werkstück, das einen rohrförmigen (oder rohrartigen) Abschnitt mit einer Längsachse aufweist, durch welche der im folgenden gebrauchte Begriff radial definiert ist, durch N ≥ 2 Prägewerkzeuge, von denen jedes während der Durchführung des Verfahrens in eine Arbeitsposition gebracht wird, zur Erzeugung der Laufradverzahnung an der Innenseite des rohrförmigen Abschnittes bearbeitet wird, indem das Werkstück eine Rotationsbewegung mit zeitlich variierender Rotationsgeschwindigkeit um die genannte Längsachse durchführt und jeweils das mindestens eine in der Arbeitsposition befindliche Prägewerkzeug radial oszillierende Bewegungen durchführt, die mit der genannten Rotationsbewegung synchronisiert sind, so dass das genannte mindestens eine in der Arbeitsposition befindliche Prägewerkzeug das Werkstück wiederholt bearbeitet, insbesondere periodisch bearbeitet.

Durch die genannte Längsachse sind die im folgenden gebrauchten Begriff "radial" und "axial" definiert.

Die Prägewerkzeuge können dabei insbesondere separate Prägewerkzeuge sein.

Typischerweise wird das Werkstück nacheinander durch das jeweilige mindestens eine in der Arbeitsposition befindliche Prägewerkzeug wiederholt bearbeitet. Und typischerweise findet, solange sich ein und dasselbe mindestens eine Prägewerkzeug in der Arbeitsposition befindet, ein periodisches Bearbeiten des Werkstückes statt. Somit wird das Werkstück während der Durchführung des Verfahrens typischerweise zumindest abschnittsweise periodisch bearbeitet.

Die Bearbeitung des Werkstückes ist typischerweise eine prägend umformende oder hämmernd umformende Bearbeitung.

Die zeitlich variierende Rotationsgeschwindigkeit des Werkstücks bildet aufeinanderfolgende Phasen relativ höherer Rotationsgeschwindigkeit und relativ geringerer Rotationsgeschwindigkeit, wobei insbesondere vorgesehen werden kann, dass das Werkstück in den Phasen der relativ geringeren Rotationsgeschwindigkeit zumindest momentan zum (Rotations-) Stillstand kommt (Rotationsstillstand hat auch eine Rotationsgeschwindigkeit, nämlich null). Die Bearbeitung des Werkstückes durch ein Prägewerkzeug findet normalerweise jeweils während einer der Phasen relativ geringerer Rotationsgeschwindigkeit statt. Je langsamer das Werkstück während des Eingriffs des jeweiligen Prägewerkzeuges rotiert bzw. je länger das Werkstück in den Phasen relativ geringerer Rotationsgeschwindigkeit langsam rotiert oder stillsteht, desto besser kann eine hohe Präzision der letztlich erzeugten Laufradverzahnung erreicht werden.

Die zeitlich variierende Rotationsgeschwindigkeit des Werkstücks ist normalerweise eine zumindest abschnittsweise periodisch variierende Rotationsgeschwindigkeit.

Ein in der Arbeitsposition befindliches periodisch in das Werkstück eingreifendes Prägewerkzeug beschreibt eine radial gerichtete vor und zurück laufende Hubbewegung, durch die das Werkstück kaltumformend bearbeitet wird, in einer Vielzahl einzelner Prägeschritte. Dabei kommen zwei oder mehr Prägewerkzeuge nacheinander zum Einsatz. Die Verzahnung wird im Werkstück durch Kaltumformung erzeugt; es findet, ausser in gegebenenfalls anschliessend durchgeführten Kalibrierungsschritten, kein Spanabtrag statt.

Innerhalb der Zeiten relativ geringerer Rotationsgeschwindigkeit des Werkstückes wird das Werkstück umgeformt, und während das Werkstück mit relativ grösserer Rotationsgeschwindigkeit rotiert, sind alle N Prägewerkzeuge, die im übrigen auch als Stempelwerkzeuge oder Stempel bezeichnet werden können, so weit vom Werkstück entfernt, dass dieses sich drehen kann, ohne von einem der Prägewerkzeuge daran gehindert zu werden.

In einer Ausführungsform ist das Hohlrad ein Getriebehohlrad.

Weiter weisen mindestens zwei der N Prägewerkzeuge verschieden geformte Wirkbereiche auf. Dabei kann insbesondere vorgesehen sein, dass
- jedes der N Prägewerkzeuge einen anders geformten Wirkbereich aufweist; oder
- M ≥ 2 eine ganze Zahl mit N = 2M ist und die N Prägewerkzeuge M Paare von Prägewerkzeugen mit im wesentlichen gleich geformten Wirkbereichen bilden und die Wirkbereiche von verschiedenen der M Paare von N Prägewerkzeugen verschieden geformt sind.

Im ersteren Fall findet während einer Periode der oszillierenden Bewegung typischerweise genau ein Eingriff eines Prägewerkzeuges in das Werkstück statt, wohingegen im zweitgenannten Fall während einer Periode der oszillierenden Bewegung typischerweise genau zwei Eingriffe von Prägewerkzeugen in das Werkstück stattfinden, nämlich jeweils ein Eingriff durch jedes der zwei Prägewerkzeuge eines der M Paare von Prägewerkzeugen, wobei diese typischerweise entlang ein und derselben radial gerichteten Achse angeordnet sind.

In einer Ausführungsform, die mit der zuvorgenannten Ausführungsform kombiniert werden kann, unterscheiden sich die verschieden geformten Wirkbereiche der Prägewerkzeuge in ihrer Länge in radialer Richtung, gemessen in der Arbeitsposition. Insbesondere kann dabei eine zeitliche Reihenfolge, in der die Prägewerkzeuge in die Arbeitsposition gebracht werden, durch die Reihenfolge gegeben sein, die sich ergibt, wenn die N Prägewerkzeuge aufsteigend gemäss der genannten Länge sortiert werden.

Insofern können die Prägewerkzeuge auch als Stufenwerkzeuge verstanden werden.

In einer Ausführungsform, die mit einer oder mehreren der zuvorgenannten Ausführungsformen kombiniert werden kann, ist vorgesehen, dass entweder
a) genau eines der N Prägewerkzeuge (welches als das N-te Prägewerkzeug bezeichnet werden kann) einen Wirkbereich aufweist, dessen Zahnprofil
   a1) dem Profil einer Zahnlücke der zu erzeugenden Laufradverzahnung im wesentlichen entspricht; oder
   a2) dem Profil zweier benachbarter Zahnlücken (und somit auch des dazwischenliegenden Zahnes) der zu erzeugenden Laufradverzahnung im wesentlichen entspricht;
   wobei jedes der weiteren Prägewerkzeuge entweder
   a3) einen Wirkbereich aufweist, dessen Zahnprofil dem Profil einer Zahnlücke der zu erzeugenden Laufradverzahnung im wesentlichen entspricht, aber in radialer Richtung (in der Arbeitspostion gemessen) eine weniger grosse Länge aufweist; oder
   a4) dem Profil zweier benachbarter Zahnlücken (und somit auch des dazwischenliegenden Zahnes) der zu erzeugenden Laufradverzahnung im wesentlichen entspricht, aber in radialer Richtung (in der Arbeitspostion gemessen) eine weniger grosse Länge aufweist;
   oder
b) M ≥ 2 eine ganze Zahl mit N = 2M ist und die N Prägewerkzeuge M Paare von Prägewerkzeugen mit im wesentlichen gleich geformten Wirkbereichen bilden, wobei die Wirkbereiche der Prägewerkzeuge genau eines der M Paare von N Prägewerkzeugen (welches als das M-te Paar von Prägewerkzeugen bezeichnet werden kann) ein Zahnprofil aufweisen, das
   b1) dem Profil einer Zahnlücke der zu erzeugenden Laufradverzahnung im wesentlichen entspricht; oder
   b2) dem Profil zweier benachbarter Zahnlücken (und somit auch des dazwischenliegenden Zahnes) der zu erzeugenden Laufradverzahnung im wesentlichen entspricht;
   und wobei die Prägewerkzeuge jedes der weiteren Paare von Prägewerkzeugen ein Zahnprofil aufweisen, das
   b3) einen Wirkbereich aufweist, dessen Zahnprofil dem Profil einer Zahnlücke der zu erzeugenden Laufradverzahnung im wesentlichen entspricht, aber in radialer Richtung (in der Arbeitspostion gemessen )eine weniger grosse Länge aufweist; oder
   b4) dem Profil zweier benachbarter Zahnlücken (und somit auch des dazwischenliegenden Zahnes) der zu erzeugenden Laufradverzahnung im wesentlichen entspricht, aber in radialer Richtung (in der Arbeitspostion gemessen) eine weniger grosse Länge aufweist.

Im Fall von a) (oder genauer a3) bzw. a4)) kann insbesondere vorgesehen sein, dass die genannte Länge im Falle des n-ten Prägewerkzeuges, 1 ≤ n ≤ N-1, im wesentlichen n/N mal der Verzahnungstiefe der zu erzeugenden Laufradverzahnung entspricht. Die Längen der Prägewerkzeuge sind dann also gleichmässig abgestuft.

Und im Fall von b) (oder genauer b3) bzw. b4)) kann insbesondere vorgesehen sein, dass die genannte Länge im Falle der Prägewerkzeuge des m-ten Paares von Prägewerkzeugen, 1 ≤ m ≤ M-1, im wesentlichen m/M mal der Verzahnungstiefe der zu erzeugenden Laufradverzahnung entspricht. Die Längen der Prägewerkzeuge der Paare von Prägewerkzeugen sind dann also gleichmässig abgestuft.

Die in a3), b3), a4), b4) beschriebenen Prägewerkzeuge können Stümpfe der in a1) oder a2) oder b1) oder b2) beschriebenen Prägewerkzeuge sein.

Beispielsweise kann die Form von in a3) bzw. b3) und a4) bzw. b4) beschriebenen Prägewerkzeugen dadurch erhältlich sein, dass man von einem in a1) oder b1) bzw. in a2) oder b2) beschriebenen Prägewerkzeug einen Teil (im Bereich des Werkzeugkopfes bzw. der Werkzeugköpfe) abschneidet, und zwar durch einen Schnitt entlang einer Ebene, die, wenn sich das Prägewerkzeug in der Arbeitsposition befindet, senkrecht steht auf einer radialen Richtung zentral durch das Prägewerkzeug. Dabei muss die Schnittfläche bzw. die Schnittflächen nicht plan sein, sondern kann bzw. können beispielsweise bombiert sein, und/oder die Schnittkanten können abgerundet sein.

Die in a1), a3), b1) oder b3) beschriebenen Prägewerkzeuge können als einzelzahnige Prägewerkzeuge verstanden und bezeichnet werden, und die in a2), a4), b2) oder b4) beschriebenen Prägewerkzeuge können als doppelzahnige Prägewerkzeuge verstanden und bezeichnet werden.

Die in a) beschriebenen Verfahren können als Einfachhubverfahren verstanden und bezeichnet werden, und die in b) beschriebenen Verfahren können als Doppelhubverfahren verstanden und bezeichnet werden. In Einfachhubverfahren findet pro Periode der oszillierenden Bewegung genau ein Eingriff eines Prägewerkzeuges in das Werkstück statt, und in der Arbeitsposition befindet sich auch nur ein einziges Prägewerkzeug. Im Doppelhubverfahren hingegen finden pro Periode der oszillierenden Bewegung genau zwei Eingriffe in das Werkstück statt, nämlich je einer durch je eines der Prägewerkzeuge eines Paares von Prägewerkzeugen, und in der Arbeitsposition befinden sich dann die beiden Prägewerkzeuge eines Paares von Prägewerkzeugen. In Doppelhubverfahren kann eine besonders hohe Fertigungsgeschwindigkeit erreicht werden. Einzelhubverfahren können apparativ einfacher realisiert werden.

Typische Werkzeugkombinationen sind:
- alle N Prägewerkzeuge sind einzelzahnig;
- alle N Prägewerkzeuge sind doppelzahnig;
- im Falle des Einfachhubverfahren ist genau ein Prägewerkzeug doppelzahnig, und N-1 Prägewerkzeuge sind einzelzahnig;
- im Falle des Doppelhubverfahren sind genau zwei Prägewerkzeuge, nämlich eines der M Paare von Prägewerkzeugen, doppelzahnig, und N-2 Prägewerkzeuge, nämlich die Prägewerkzeuge von M-1 Paaren von Prägewerkzeugen, sind einzelzahnig.

In einer Ausführungsform, die mit einer oder mehreren der zuvorgenannten Ausführungsformen kombiniert werden kann, weist mindestens eines der

N Prägewerkzeuge einen Wirkbereich auf, dessen Zahnprofil dem Profil zweier benachbarter Zahnlücken (und somit auch des dazwischenliegenden Zahnes) der zu erzeugenden Laufradverzahnung im wesentlichen entspricht (zuvor als doppelzahniges Prägewerkzeug bezeichnet). Insbesondere kann jedes der N Prägewerkzeuge einen Wirkbereich aufweisen, der das genannte Zahnprofil aufweist.

In einer Ausführungsform, die mit einer oder mehreren der zuvorgenannten Ausführungsformen kombiniert werden kann, werden die N Prägewerkzeuge durch einen Werkzeughalter gehaltert. Insbesondere kann der Werkzeughalter zu einer Bewegung angetrieben werden, durch die Prägewerkzeuge in die Arbeitsposition gebracht werden können. Dadurch kann auf einfache und automatisierbare Weise erreicht werden, dass ein rascher Wechsel der das Werkstück bearbeitenden Prägewerkzeuge stattfinden kann. Dadurch können kurze Bearbeitungszeiten realisiert werden.

Der Werkzeughalter kann zu radial oszillierenden Bewegungen angetrieben sein, aufgrund derer in der Arbeitsposition befindliche Prägewerkzeuge die genannte radial oszillierende Bewegung durchführen. Dadurch kann auf relativ einfache Weise eine automatisierbare und rasche Werkstückbearbeitung erreicht werden.

Auch kann der Werkzeughalter eine Trommel aufweisen, auf deren Umfang die Prägewerkzeuge angeordnet sind. Ein solcher Werkzeughalter oder die Trommel kann als Revolver bezeichnet werden. Solch eine Trommel kann rotierbar sein, so dass durch eine Rotationsbewegung der Trommel Prägewerkzeuge in die Arbeitsposition gebracht werden können. Insbesondere kann die Trommel um eine zu der Längsachse parallele Rotationsachse rotierbar sein, insbesondere intermittierend (mit relativ langen Stillstandsphasen gegenüber den Phasen der Rotationsbewegung). Die N Prägewerkzeuge können gleichmässig oder ungleichmässig über den Umfang der Trommel verteilt sein.

Zusätzlich oder alternativ kann der Werkzeughalter einen stab- oder balkenförmigen Teil aufweisen, auf dem Prägewerkzeuge hintereinander angeordnet sind. Insbesondere kann vorgesehen sein, dass die N Prägewerkzeuge genau eine Reihe bilden (insbesondere im Falle eines Einzelhubverfahrens) oder genau zwei auf einander gegenüberliegenden Seiten des stab- oder balkenförmigen Teils angeordnete Reihen bilden (insbesondere im Falle eines Doppelhubverfahrens). Die eine oder zwei Reihen von Prägewerkzeugen können insbesondere parallel zur Längsachse verlaufend sein. Typischweise ist der stab- oder balkenförmige Teil parallel zu der Längsachse verschiebar, so dass dadurch Prägewerkzeuge in die Arbeitsposition gebracht werden können.

In einer Ausführungsform, die mit einer oder mehreren der zuvorgenannten Ausführungsformen kombiniert werden kann, bearbeitet das genannte mindestens eine in der Arbeitsposition befindliche Prägewerkzeug das Werkstück in solchen Phasen der Rotationsbewegung, in denen das Werkstück zumindest momentan stillsteht. Insbesondere kann die Rotationsbewegung des Werkstücks eine intermittierende Rotation sein, und das genannte mindestens eine in der Arbeitsposition befindliche Prägewerkzeug bearbeitet das Werkstück in Phasen des Rotationsstillstandes des Werkstückes. Das mindestens eine Prägewerkzeug ist dann also in Phasen des Stillstandes der intermittierenden Werkstückkrotationsbewegung mit dem Werkstück in Eingriff. Es ist zu bemerkenn dass eine intermittierende Rotation beinhaltet, dass zwischen Phasen der Rotation Phasen des Rotationsstillstandes vorgesehen sind, wobei Phasen Zeitdauern kennzeichnen, wodurch sich Stillstandsphasen von momentanem Stillstand unterscheiden. Normalerweise ist dann vorgesehen, dass innerhalb der Zeiten des Rotationsstillstandes das Werkstück umgeformt wird, und dass während der Rotation des Werkstückes alle N Prägewerkzeuge so weit vom Werkstück entfernt sind, dass sich das Werkstück drehen kann, ohne von einem der Prägewerkzeuge daran gehindert zu werden.

In einer Ausführungsform, die mit einer oder mehreren der zuvorgenannten Ausführungsformen kombiniert werden kann, ist vorgesehen, dass
c) zunächst ein erstes der N Prägewerkzeuge in die Arbeitsposition gebracht wird und dann nacheinander die weiteren der N Prägewerkzeuge, bis zum N-ten Prägewerkzeug, wobei jedes der N Prägewerkzeuge mindestens solange in der Arbeitsposition verbleibt, bis jede entstehende Zahnlücke der zu erzeugenden Laufradverzahnung mindestens einmal, insbesondere mindestens zweimal, durch das jeweilige in der Arbeitsposition befindliche Prägewerkzeug bearbeitet wurde, insbesondere wobei sämtliche der N Prägewerkzeuge verschieden geformte Wirkbereiche aufweisen;
   oder
d) M ≥ 2 eine ganze Zahl mit N = 2M ist und die N Prägewerkzeuge M Paare von Prägewerkzeugen mit im wesentlichen gleich geformten Wirkbereichen bilden und zunächst ein erstes Paar der M Paare von Prägewerkzeugen in die Arbeitsposition gebracht wird und dann nacheinander die weiteren der M Paare von Prägewerkzeugen, bis zum M-ten Paar der Prägewerkzeuge, wobei jedes der M Paare der Prägewerkzeuge mindestens solange in der Arbeitsposition verbleibt, bis jede entstehende Zahnlücke der zu erzeugenden Laufradverzahnung mindestens einmal, insbesondere mindestens zweimal, durch mindestens eines der zwei, insbesondere durch beide der zwei in der Arbeitsposition befindlichen Prägewerkzeuge des jeweiligen Paares von Prägewerkzeugen bearbeitet wurde, insbesondere wobei sämtliche der M Paare von Prägewerkzeugen verschieden geformte Wirkbereiche aufweisen.

Im allgemeinen betrifft Fall c) ein Einzelhubverfahren und Fall d) ein Doppelhubverfahren.

Typischerweise ist vorgesehen, dass die N Prägewerkzeuge während der Durchführung des Verfahrens bezüglich ihrer radialen Koordinate innerhalb der durch die Innenseite des rohrförmigen Abschnitts definierten radialen Koordinaten angeordnet sind.

In einer Ausführungsform, die mit einer oder mehreren der zuvorgenannten Ausführungsformen kombiniert werden kann, ist vorgesehen, dass
- N ≥ 4 gilt und sämtliche der N Prägewerkzeuge verschieden geformte Wirkbereiche aufweisen; oder
- M ≥ 3 eine ganze Zahl mit N = 2M ist und die N Prägewerkzeuge M Paare von Prägewerkzeugen mit im wesentlichen gleich geformten Wirkbereichen bilden.

Typischerweise gilt bei Einfachhubverfahren 3 ≤ N ≤ 10 und bei Doppelhubverfahren 3 ≤ M ≤ 8.

In einer Ausführungsform, die mit einer oder mehreren der zuvorgenannten Ausführungsformen kombiniert werden kann, ist das Hohlrad ein Getriebehohlrad.

In einer Ausführungsform, die mit einer oder mehreren der zuvorgenannten Ausführungsformen kombiniert werden kann, ist das Hohlrad ein dickwandiges Hohlrad. Wir bezeichnen ein verzahntes Hohlrad als dickwandig, wenn die Restwandstärke des Hohlrades mindestens 0.25 mal so gross ist wie die Verzahnungstiefe bzw. in einem engeren Sinne, mindestens 0.5 mal so gross ist wie die Verzahnungstiefe. Die Verzahnungstiefe ist der Abstand zwischen Fusskreis und Kopfkreis, und die Restwandstärke gibt die bei einem Zahngrund verbleibende Materialstärke bis zur Aussenoberfläche des Laufrades an.

In einer Ausführungsform, die mit einer oder mehreren der zuvorgenannten Ausführungsformen kombiniert werden kann, weist das Hohlrad eine Restwandstärke auf, die mindestens genauso gross ist wie die Verzahnungstiefe der Laufradverzahnung.

In einer Ausführungsform, die mit einer oder mehreren der zuvorgenannten Ausführungsformen kombiniert werden kann, ist die Laufradverzahnung eine Schrägverzahnung mit einem Schrägungswinkel β mit |β| > 0°. In diesem Fall ist die Laufradverzahnung also zur Längsachse gewinkelt verlaufend. Insbesondere kann für den Schrägungswinkel gelten: 40° ≥ |β| ≥ 5°.

Alternativ kann die Laufradverzahnung eine Geradverzahnung sein, also zur Längsachse parallel verlaufend sein (β = 0°).

In einer Ausführungsform, die mit einer oder mehreren der zuvorgenannten Ausführungsformen kombiniert werden kann, ist das Hohlrad topfförmig (oder topfartig) ausgebildet, mit einem an den rohrförmigen Abschnitt anschliessenden Bodenteil. Insbesondere kann der rohrförmige Abschnitt mit dem Bodenteil einstückig ausgebildet sein. Bei aus dem Stand der Technik bekannten spanabtragenden Verfahren wird im allgemeinen zunächst ein rohrförmiges Werkstück mit der Verzahnung versehen und anschliessend mit dem Bodenteil verbunden, zum Beispiel durch Schweissen. Dies bringt nicht nur einen weiteren Fertigungsschritt mit sich, sondern auch noch Ausrichtungs- und Justierprobleme, was die Gefahr einer nicht ausreichend genauen Ausrichtung von Bodenteil zu Verzahnung birgt. Bei Verwendung eines erfindungsgemässen Verfahrens hingegen, kann ein einstückiges Werkstück vorgesehen werden, was derartige nachfolgende Fertigungsschritte überflüssig macht.

In einer Ausführungsform mit topfförmigem Hohlrad ist zwischen dem Bodenteil und dem verzahnten Bereich ein Einstich vorgesehen, also ein Bereich mit einer Ausnehmung, die radial bis jenseits des Kopfkreisdurchmessers der Laufradverzahnung erstreckt ist.

Ein topfförmiges Hohlrad bzw. ein entsprechendes Werkstück kann, für bestimmte Applikationen, im Bodenteil (mindstens) ein Loch aufweisen.

In einer Ausführungsform, die mit einer oder mehreren der zuvorgenannten Ausführungsformen kombiniert werden kann, ist die Verzahnungstiefe der Laufradverzahnung mindestents 2.0 mal, insbesondere mindestens 2.2 mal so gross wie der Modul der Laufradverzahnung. Insbesondere kann die Verzahnungstiefe mindestens 2.4 mal, oder sogar mindestens 2.5 mal so gross wie der Modul der Laufradverzahnung sein. Solch grosse Verzahnungstiefen bzw. entsprechende sogenannte Hochverzahnungen sind mit dem beschriebenen Verfahren gut herstellbar, bereiten aber in anderen kaltumformenden Verfahren grosse Probleme bei der Fertigung. Grosse Verzahnungstiefen ermöglichen einen grossen Überdeckungsgrad, was die entsprechenden Hohlräder besonders belastbar macht.

Mit dem "Modul" ist, sofern nichts anderes angegeben ist, der Stirnmodul gemeint.

In einer Ausführungsform, die mit einer oder mehreren der zuvorgenannten Ausführungsformen kombiniert werden kann, hat die Laufradverzahnung einen Modul zwischen 0.5 und 8, insbesondere zwischen 1 und 5 und/oder einen Modul von mindestens 1.25.

In einer Ausführungsform, die mit einer oder mehreren der zuvorgenannten Ausführungsformen kombiniert werden kann, weist die Laufradverzahnung einen Teilkreisdurchmesser und eine verzahnte Länge auf, für die gilt, dass der Teilkreisdurchmesser mindestens 2 mal und höchstens 20 mal so gross ist, insbesondere mindestens 3 mal und höchstens 15 mal so gross ist oder mindestens 4 mal und höchstens 10 mal so gross ist wie die verzahnte Länge.

Bekanntermassen gilt für den Stirn-Modul m_{S}: m_{S} = Td/p, wobei Td den Teilkreisdurchmesser bezeichnet und p die Anzahl Zähne der Laufradverzahnung. Und es gilt für den Stirn-Modul m_{S}: m_{S} = t/π, wobei π die Kreiszahl und t die Teilung (Stirnteilung) der Verzahnung bezeichnet.

In einer Ausführungsform, die mit einer oder mehreren der zuvorgenannten Ausführungsformen kombiniert werden kann, wird durch die beschriebene Bearbeitung des Werkstückes in dem Werkstück keine der Laufradverzahnung entsprechende Aussenverzahnung erzeugt.

In einer Ausführungsform, die mit einer oder mehreren der zuvorgenannten Ausführungsformen kombiniert werden kann, weist das Hohlrad keine Aussenverzahnung auf, insbesondere keine der Innenverzahnung entsprechende Aussenverzahnung.

In einer Ausführungsform, die mit einer oder mehreren der zuvorgenannten Ausführungsformen kombiniert werden kann, wirkt bei der Erstellung der Laufradverzahnung kein Dorn mit, insbesondere kein Dorn, der eine der zu erstellenden Verzahnung entsprechende Profilierung aufweist.

In einer Ausführungsform, die mit einer oder mehreren der zuvorgenannten Ausführungsformen kombiniert werden kann, ist das Werkstück in einem Werkstückaufnehmer aufgenommen, der eine bezüglich der Längsachse im wesentlichen rotationssymmetrische, insbesondere im wesentlichen zylindrisch ausgebildete Aussenfläche aufweist. Insbesondere kann das Werkstück während der periodischen Bearbeitung durch die Prägewerkzeuge in dem Werkstückaufnehmer aufgenommen sein. Es ist aber alternativ auch möglich, dass das Werkstück nicht in einem Werkstückaufnehmer aufgenommen ist; auch in diesem Fall kann das Werkstück rotiert werden, normalerweise mittels eines Werkzeughalters.

In einer Ausführungsform, die mit der letztgenannten Ausführungsform zu kombinieren ist, ist der Werkstückaufnehmer im wesentlichen ringförmig bzw. hohlzylindrisch oder topfförmig ausgebildet.

In einer Ausführungsform, die mit einer der beiden letztgenannten Ausführungsformen zu kombinieren ist, ist der Werkstückaufnehmer als eine Einspannvorrichtung für das Werkstück ausgebildet.

In einer Ausführungsform, die mit einer oder mehreren der zuvorgenannten Ausführungsformen kombiniert werden kann, ist mindestens ein Gegenhalter vorgesehen. Durch einen Gegenhalter werden Kräfte, die durch ein im Eingriff in das Werkstück befindliche Prägewerkzeug auf das Werkstück wirken, insbesondere radial gerichtete Kräfte, aufgenommen, so dass das Werkstück während der Prägewerkzeugeingriffe im wesentlichen ortsfest bleibt. Während der Werkzeugeingriffe liegt der mindestens eine Gegenhalter am Werkstück oder ggf. am Werkstückaufnehmer an, und zwar vorzugsweise spielfrei; während das Werkstück rotiert wird, sind Werkstück (bzw. ggf. Werkstückaufnehmer) und Gegenhalter vorzugsweise voneinander beabstandet, können aber insbesondere auch dann am Werkstück (bzw. am Werkstückaufnehmer) anliegen. Typischerweise wird ein in der Arbeitsposition befindliches Prägewerkzeug durch Aufwenden einer Zugkraft zum prägenden Eingriff mit dem Werkstück gebracht. Die Verwendung von Schubkräften ist aber ebenfalls möglich. Bei Doppelhubverfahren werden im allgemeinen alternierend Zug- und Hubkräfte verwendet, z.B. wenn eine x-Richtung radial verläuft, können in +x-Richtung Zug- und in -x-Richtung Schubkräfte verwendet werden.

In Einfachhubverfahren ist typischerweise mindestens ein oder genau ein Gegenhalter vorgesehen, wohingegen in Doppelhubverfahren typischerweise mindestens zwei oder genau zwei Gegenhalter vorgesehen sind, wobei insbesondere zwei einander bzgl. der Längsachse im wesentlichen spiegelbildlich einander gegenüberliegende Gegenhalter vorgesehen sein können.

Ein Gegenhalter ist im allgemeinen während des Werkszeugeingriffs im wesentlichen feststehend.

In einer Ausführungsform mit mindestens einem Gegenhalter ist dieser der Aussenform des Werkstückes oder der Aussenform eines Werkstückaufnehmers, in welchem das Werkstück aufgenommen ist, angeformt (in seiner Form angepasst).

In einer Ausführungsform, die mit der letztgenannten Ausführungsform kombiniert werden kann, weist jeder der beschriebenen Gegenhalter kein der in das Werkstück einzubringenden Laufradverzahnung entsprechendes Profil auf.

In einer Ausführungsform, die mit einer oder mehreren der zuvorgenannten Ausführungsformen kombiniert werden kann, und in der das Werkstück in einem Werkstückaufnehmer aufgenommen ist, weist der Werkstückaufnehmer kein der in das Werkstück einzubringenden Laufradverzahnung entsprechendes Profil auf.

In einer Ausführungsform, die mit einer oder mehreren der zuvorgenannten Ausführungsformen kombiniert werden kann, wird das Verfahren so durchgeführt, dass in einer Vielzahl von Umläufen der Rotation des Werkstückes durch die periodische Bearbeitung des Werkstücks durch die Prägewerkzeuge eine immer tiefere Ausbildung der Zahnlücken der Laufradverzahnung erzeugt wird, bis eine vorgegebene Verzahnungstiefe und -form der Laufradverzahnung erreicht ist. Wird ein solches Verfahren angewandt, so brauchen nach den beschriebenen Bearbeitungsschritten durch die Prägewerkzeuge im allgemeinen keine anschliessenden weiteren Schritte zur Kalibrierung oder Nachformung der Laufradverzahnung mehr durchgeführt zu werden.

In einer Ausführungsform, die mit einer oder mehreren der zuvorgenannten Ausführungsformen kombiniert werden kann, ist das Werkstück relativ zu der Verzahnungsfläche der Laufradverzahnung konkav ausgebildet, typischerweise im Bereich der durch die Prägewerkzeuge bearbeiteten Innenfläche.

In einer Ausführungsform, die mit einer oder mehreren der zuvorgenannten Ausführungsformen kombiniert werden kann, sind die Prägewerkzeuge in Verzahnungsrichtung (Verlaufsrichtung der Zahnlücken) länger als die Zahnlücken der Laufradverzahnung. Dies bezieht sich natürlich auf den Wirkbereich des Prägewerkzeuges, also auf den Bereich des Prägewerkzeuge, der in das Werkstück eingreift, also damit in (umformenden) Kontakt kommt. Dies kann dazu beitragen, sicherzustellen, dass die Laufradverzahnung über ihre gesamte Länge mit hoher Präzision erstellt wird.

In einer Ausführungsform, die mit einer oder mehreren der zuvorgenannten Ausführungsformen kombiniert werden kann, ist vorgesehen, dass jedes der Prägewerkzeuge einen Wirkbereich aufweist, der mindestens einen Werkzeugkopf und Werkzeugflanken umfasst, und wobei ein Werkzeugkopf mindestens eines der Prägewerkzeuge, insbesondere aller N Prägewerkzeuge konvex ausgebildet ist. Ein einzelzahniges Prägewerkzeug weist einen Werkzeugkopf und zwei daran angrenzende Werkzeugflanken auf. Ein doppelzahniges Prägewerkzeug weist zwei Werkzeugköpfe mit je zwei daran angrenzenden Werkzeugflanken auf. Das Vorsehen von bombierten Prägewerkzeugen kann dazu beitragen, sicherzustellen, dass die Laufradverzahnung über ihre gesamte Länge mit hoher Präzision erstellt wird. Die Bombierung kann in radialer Richtung vorgesehen sein. Insbesondere kann ein Werkzeugkopf in einem Schnitt symmetrisch zwischen an den Werkzeugkopf angrenzenden Werkzeugflanken eine konvexe Form, insbesondere einen Ellipsenabschnitt beschreiben (wobei ein Kreisabschnitt auch ein Ellipsenabschnitt ist).

In einer Ausführungsform, die mit einer oder mehreren der zuvorgenannten Ausführungsformen kombiniert werden kann, wird das Verfahren so durchgeführt, dass in einer Vielzahl von Umläufen der Rotation des Werkstückes durch die periodische Bearbeitung des Werkstücks durch die Prägewerkzeuge eine in Verzahnungsrichtung fortschreitende Ausbildung der Zahnlücken der Laufradverzahnung bewirkt wird, bis eine vorgegebene verzahnte Länge der Laufradverzahnung erreicht ist. Während der Durchführung eines solchen Verfahrens erstrecken sich die Zähne und Zahnlücken der zu erzeugenden Laufradverzahnung also immer und immer weiter in Richtung einer Koordinate parallel zur Längsachse (wobei die Zahnlücken im Falle einer Schrägverzahnung natürlich nicht parallel zur Längsachse verlaufend sind). Die verzahnte Länge der Laufradverzahnung wird also im Laufe der Durchführung eines solchen Verfahrens länger, bis die vorgegebene verzahnte Länge erreicht ist. Beispielsweise wird an einem Ende des rohrförmigen Abschnitts mit einem ersten Prägewerkzeug oder Prägewerkzeugpaar begonnen und das Werkstück sukzessive bis an das gegenüberliegende Ende des rohrförmigen Abschnitts bearbeitet, und danach wird an wieder einem Ende des rohrförmigen Abschnitts, aber mit einem zweiten Prägewerkzeug oder Prägewerkzeugpaar begonnen und das Werkstück sukzessive bis an das gegenüberliegende Ende des rohrförmigen Abschnitts bearbeitet, bis alle N Prägewerkzeuge eingesetzt wurden und die Laufradverzahnung in voller Tiefe und voller Länge fertiggestellt ist. Typischerweise werden das in der Arbeitsposition befindliche mindestens eine Prägewerkzeug und das Werkstück (während der Rotationsbewegung des Werkstückes und während der radial oszillierenden Prägewerkzeugbewegung) in Axialrichtung relativ zueinander bewegt. Die Relativbewegung von Werkstück und Prägewerkzeug(en) beschreibt somit (für jedes Prägewerkzeug in der Arbeitsposition) eine von der radial oszillierenden Bewegung des genannten Prägewerkzeuges überlagerte schraubenförmige Raumkurve.

In einer Ausführungsform, die mit einer oder mehreren der zuvorgenannten Ausführungsformen kombiniert werden kann, ist das Hohlrad ein Bestandteil eines Getriebes, insbesondere eines Kraftfahrzeug-Automatikgetriebes. Das Getriebe weist im allgemeinen auch noch mehrere Planetenräder auf, die mit dem Hohlrad zusammenwirken.

Verfahren der oben beschriebenen Art können verwendet werden zum Herstellen eines Hohlrades eines Getriebes, insbesondere eines Kraftfahrzeug-Automatikgetriebes.

In den Verfahren zur Herstellung eines Getriebes, das ein mit einer innenliegenden Laufradverzahnung versehenes Hohlrad aufweist, wird das Hohlrad gemäss einem der vorangegangenen Verfahren hergestellt. Das Getriebe weist im allgemeinen auch noch mindestens ein Planetenrad, in der Regel mindestens zwei Planetenräder auf, das bzw. die mit dem Hohlrad zusammenwirken.

Die Vorrichtung zur Herstellung von mit einer innenliegenden Laufradverzahnung versehenen Hohlrädern weist auf:
- einen um seine Längsachse rotierbaren Werkstückhalter zur Halterung eines Werkstückes mit einem entlang der Längsachse ausgerichteten rohrförmigen Abschnitt, derart, dass der rohrförmige Abschnitt an seiner Innenseite bearbeitbar ist;
- einen Antrieb für die Rotation des Werkstückhalters, der ausgelegt ist zur Erzeugung einer Rotation mit zeitlich variierender Rotationsgeschwindigkeit, insbesondere einer intermittierenden Rotation;
- einen Werkzeughalter zum Halten von N ≥ 2, insbesondere N ≥ 4 Prägewerkzeugen, mittels dessen jedes der N Prägewerkzeuge in eine Arbeitsposition gebracht werden kann, und der zum Durchführen einer radial zu der Längsachse verlaufenden linear oszillierenden Bewegung antreibbar ist, so dass der rohrförmige Abschnitt an seiner Innenseite durch ein in der Arbeitsposition befindliches Prägewerkzeug wiederholt, insbesondere periodisch bearbeitbar ist, wobei mindestens zwei der N Prägewerkzeuge verschieden geformte Wirkbereiche aufweisen;
- einen Antrieb für ein Antreiben des Werkzeughalters zu einer Bewegung, durch die die Prägewerkzeuge in die Arbeitsposition gebracht werden können;
- eine Synchronisationsvorrichtung zur Synchronisation einer mittels des Antriebs für die Rotation des Werkstückhalters erzeugbaren Rotation des Werkstückhalters mit der radial zu der Längsachse verlaufenden linear oszillierenden Bewegung des Werkzeughalters.

Insbesondere kann die Vorrichtung die N Prägewerkzeuge umfassen.

Die Prägewerkzeuge dienen der periodischen Einwirkung auf das Werkstück, so dass die Erzeugung der Laufradverzahnung in eine Vielzahl von Einzel-Prägevorgängen zerlegt stattfinden kann. Weiter können verschieden ausgebildete Prägewerkzeuge dazu dienen, das schrittweise tiefer werdende Eindringen der Prägewerkzeuge weiter in Etappen zu unterteilen.

Damit das Werkstück an seiner Innenseite bearbeitbar ist, ist das Werkstück derart gehaltert, dass die innenliegende Oberfläche des Werkstückes dieser Bearbeitung durch die Prägewerkzeuge zugänglich ist.

In einer Ausführungsform ist der Antrieb für die Rotation des Werkstückhalters ein Torquemotor.

In einer Ausführungsform weist der Werkstückhalter einen Werkstückaufnehmer zur Aufnahme des Werkstücks auf, der insbesondere eine bezüglich der Längsachse im wesentlichen rotationssymmetrische Aussenfläche aufweist. Beispielsweie kann diese Aussenfläche im wesentlichen zylindrisch ausgebildet sein. Der Werkstückaufnehmer kann beispielsweise im wesentlichen ringförmig bzw. hohlzylindisch oder topfförmig ausgebildet sein.

In einer Ausführungsform weist die Vorrichtung mindestens einen Gegenhalter auf, der mit dem Werkstück (und ggf. mit dem Werkstückaufnehmer) derart zusammenwirkt, dass durch ihn Kräfte, die durch Prägewerkzeuge auf den Werkstückhalter ausgeübt werden, aufgenommen werden. Typischerweise betrifft dies vor allem solche Kräfte oder Kraftkomponenten, die im wesentlichen radial wirken.

In einer Ausführungsform, die mit einer oder mehreren der zuvorgenannten Ausführungsformen der Vorrichtung kombiniert werden kann, ist der Werkstückhalter entlang der Längsachse verschiebbar. In diesem Fall kann ein Antrieb für die entsprechende Längsverschiebung des Werkstückhalters vorgesehen sein.

Weiter kann vorteilhaft ein Antrieb für die linear oszillierende Bewegung des Werkzeughalters vorgesehen sein.

Die Erfindung umfasst weiter Vorrichtungen mit Merkmalen, die den Merkmalen von beschriebenen Verfahren entsprechen und umgekehrt auch Verfahren mit Merkmalen, die den Merkmalen von beschriebenen Vorrichtungen entsprechen.

Die Vorteile der Vorrichtungen entsprechen den Vorteilen der entsprechenden Verfahren und umgekehrt.

Weiter ist eine Verwendung einer der oben beschriebenen Vorrichtungen offenbart, nämlich eine Verwendung einer solchen Vorrichtung zum Erstellen einer innenliegenden Laufradverzahnung in einem Hohlrad. Insbesondere kann eine solche Vorrichtung zum Erstellen einer innenliegenden Laufradverzahnung in einem Hohlrad eines Getriebes, insbesondere eines Kraftfahrzeug-Automatikgetriebes verwendet werden.

Das Getriebe weist ein mit einer innenliegenden Laufradverzahnung versehenes Hohlrad auf, dessen innenliegende Laufradverzahnung durch eines der oben beschriebenen Verfahren erstellt ist, insbesondere wobei das Getriebe ein Automatikgetriebe für ein Kraftfahrzeug ist.

Erfindungsgemäss hergestellte Laufradverzahnungen können sich durch grosse Präzision auszeichnen und durch grosse Formstabilität, wobei letztere im wesentlichen der speziellen kaltumformenden Bearbeitung beziehungsweise der durch diese erzielten grossen Materialfestigkeit (insbesondere im Randbereich der Verzahnung) zugeschrieben werden kann. Zudem können sich diese Laufradverzahnungen durch eine hohe Oberflächengüte auszeichnen, ohne dass eine (nennenswerte, nachformende) Nachbearbeitung notwendig wäre. Auch ist ein Härteverzug, dem ein solches Hohlrad bei einer Härtung durch Wärmeeinwirkung unterliegt, deutlich geringer als bei einem Hohlrad, bei dem die Laufradverzahnung spanabhebend erzeugt wurde.

Werkstücke sind typischerweise aus legiertem Vergütungsstahl (mit typischweise mindestens 0.3% Kohlenstoffgehalt), der nachher typischweise induktiv gehärtet oder lasergehärtet wird, oder aus legiertem Einsatzstahl (mit typischweise höchstens 0.3% Kohlenstoffgehalt), der nachher typischweise durch Gasnitrieren oder Nitrokarborieren gehärtet wird.

Der Durchmesser (Teilkreisdurchmesser) einer typischen Laufradverzahnung liegt im Bereich 50 mm bis 450 mm, insbesondere im Bereich 100 mm bis 350 mm und oft im Bereich 200 mm bis 300 mm.

Die mittels des Verfahrens erreichbaren Toleranzen (der Laufradverzahnung) entsprechen typischweise der Qualität 8 oder der Qualität 7 nach DIN 3960.

Die durch das Verfahren erzeugte Rauhigkeit der Oberflächen der Laufradverzahnung sind im allgemeinen durch Ra-Werte (gemäss DIN 4287) kleiner oder gleich 0.8 µm zu charakterisieren. Insbesondere haben sie meist Ra-Werte kleiner oder gleich 0.6 µm, typischerweise sogar im Bereich 0.2 µm bis 0.6 µm.

Weitere Ausführungsformen und Vorteile gehen aus den abhängigen Patentansprüchen und den Figuren hervor.

### Kurze Beschreibung der Zeichnungen

Im folgenden wird der Erfindungsgegenstand anhand von Ausführungsbeispielen und den beiliegenden Zeichnungen näher erläutert. Es zeigen:
- Fig. 1: ein Detail einer Vorrichtung zur Herstellung eines mit einer innenliegenden Laufradverzahnung versehenen Hohlrades, in einem zur Längsachse des Werkstücks parallelen Teilschnitt;
- Fig. 2: ein Detail der Vorrichtung zur Herstellung eines mit einer innenliegenden Laufradverzahnung versehenen Hohlrades gemäss Fig. 1, in einem zur Längsachse des Werkstücks senkrechten Teilschnitt;
- Fig. 3: ein Detail eines zur Längsachse senkrechten Schnitts durch ein Hohlrad mit Laufradverzahnung;
- Fig. 4: ein Werkstück, in einem längsachsenparallelen Schnitt;
- Fig. 5: ein Hohlrad mit Laufradverzahnung, gefertigt aus dem Werkstück gemäss Fig. 4, in einem Schnitt durch die Längsachse;
- Fig. 6: ein bombiertes Prägewerkzeug, in einem Schnitt entlang des Werkzeugzahnes, schematisch;
- Fig. 7: ein Detail zur Illustration einer Anordnung mit Werkzeugaufnehmer, in einem Anfangszustand, in einem zur Längsachse des Werkstücks senkrechten Schnitt;
- Fig. 8: ein Detail zur Illustration einer Anordnung ohne Werkzeugaufnehmer, in einem Anfangszustand, in einem zur Längsachse des Werkstücks senkrechten Schnitt;
- Fig. 9: eine schematische Illustration eines Einzelhub-Verfahrens mit doppelzahnigen Prägewerkzeugen;
- Fig. 10: eine Illustration eines Doppelhub-Verfahrens;
- Fig. 11 bis 16: eine Illustration eines Verlaufs eines Einzelhub-Verfahrens mit einzahnigen Prägewerkzeugen.

Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

### Wege zur Ausführung der Erfindung

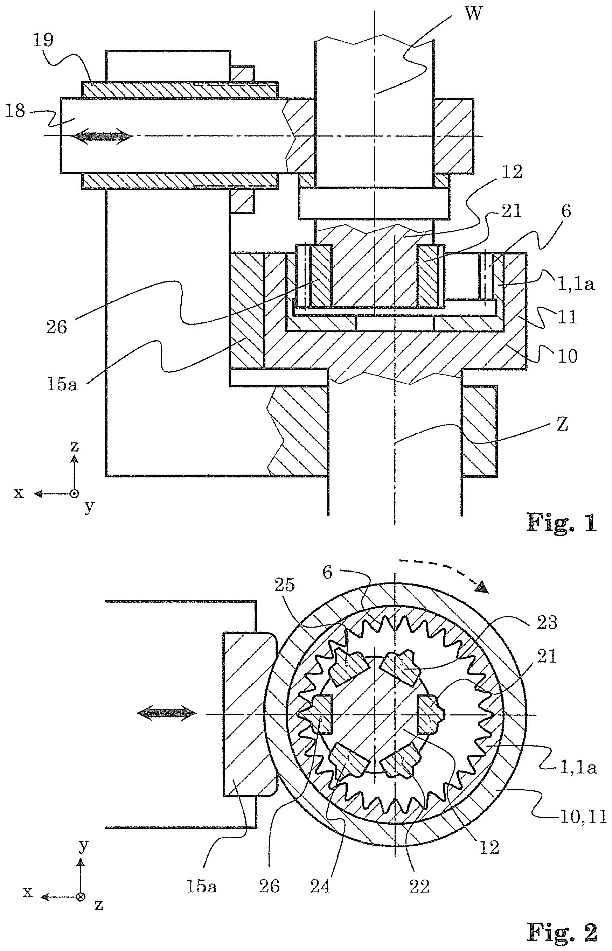

Figs. 1 und 2 zeigen jeweils ein Detail einer Vorrichtung zur Herstellung eines mit einer innenliegenden Laufradverzahnung versehenen Hohlrades 1a, in einem zur Längsachse des Werkstücks parallelen (Fig. 1) bzw. senkrechten (Fig. 2) Teilschnitt; die Koordinaten x, y, z sind in den Figuren angegeben.

Mittels der Vorrichtung kann in ein Werkstück 1 eine Laufradverzahnung eingebracht werden, so dass ein Hohlrad 1a mit einer Laufradverzahnung 6 entsteht. Das Werkstück 1 hat eine Längsachse Z, die während der Bearbeitung mit einer Achse (Rotationsachse) eines das Werkstück 1 haltenden Werkstückhalters 10 zusammenfällt, so dass der Einfachheit halber die entsprechende Achse im weiteren auch als Achse Z bezeichnet wird.

Durch einen Werkzeughalter 12 sind mehrere Prägewerkzeuge 21, 22,... gehaltert, mittels derer ein Werkstück 1 periodisch bearbeitet werden kann. Dazu führt der Werkzeughalter 12 eine oszillierende Bewegung in x-Richtung durch (versinnbildlicht durch den Doppelpfeil oben links in Fig. 1). Diese wird über einen Schaft 18 vermittelt, der zu oszillierender Bewegung relativ zu einer Zustellhülse 19 angetrieben ist. Ein in einer Arbeitsposition befindliches Prägewerkzeug, in Figs. 1 und 2 das Prägewerkzeug 26, kommt auf diese Weise wiederholt, im allgemeinen periodisch, in Eingriff mit dem Werkstück. Das Werkstück 1 seinerseits wird mittels des Werkstückhalters 10 um die Achse Z mit variierender Rotationsgeschwindigkeit gedreht, insbesondere intermittierend gedreht (versinnbildlicht durch den gestrichelten Pfeil in Fig. 2). Die oszillierende Bewegung des Werkzeughalters 12, die einer oszillierenden Bewegung von in der Arbeitsposition befindlichen Prägewerkzeugen entspricht, ist mit der Rotation des Werkstückes 1 synchronisiert. Die Bewegungen von Werkstück 1 (bzw. Werkstückhalter 10) und Werkzeughalter 12 sind so synchronisiert, dass in Phasen minimaler Werkstückrotationsgeschwindigkeit (im Falle einer intermittierenden Werkstückrotation: in Phasen des Stillstandes der intermittierenden Rotation des Werkstückes) das mindestens eine in der Arbeitsposition befindliche Prägewerkzeug mit dem Werkstück 1 in Eingriff kommt. Im Falle einer intermittierenden Werkstückrotation kann das Werkstück 1 weiterrotiert werden (typischerweise um eine Teilung), sobald der Werkzeughalter 12 weit genug (in x-Richtung) verschoben ist, dass die Prägewerkzeuge 21, 22,... während der Werkstückrotation nicht mit dem Werkstück 1 in Kontakt kommen. In der in Figs. 1 und 2 dargestellten Situation wird das Werkstück 1 weiterrotiert, sobald das Prägewerkzeug 26 weit genug aus der entstehenden Zahnlücke herausgefahren ist. Bei einer nicht-intermittierenden Werkstückrotation ist das Geschwindigkeitsprofil (zeitliche Variation der Rotationsgeschwindigkeit) entsprechend zu wählen.

Danach - also im Falle intermittierender Rotation innerhalb der nächsten Stillstandsphase - greift das mindestens eine in der Arbeitsposition befindliche Prägewerkzeug wieder in das Werkstück 1 ein, zur Weiterbildung der nächsten Zahnlücke der zur erzeugenden Laufradverzahnung 6, usw. Die Laufradverzahnung 6 wird so durch ein Nacheinanderausführen einer Vielzahl von Prägesschritten kaltumformend erzeugt. Dabei kommen aber ausserdem noch verschieden geformte Prägewerkzeuge nacheinander zum Einsatz.

Zunächst wird in der zuvor beschriebenen Weise ein erstes Prägewerkzeug 21 eingesetzt, so dass am Ort jeder zu erzeugenden Zahnlücke eine noch nicht bis zur endgültigen Verzahnungstiefe reichende Vertiefung erzeugt wird, indem mindestens ein Werkzeugeingriff pro zu erzeugender Zahnlücke stattfindet (typischerweise aber zwei oder drei), wobei im Falle mehrerer Werkzeugeingriffe mit demselben Prägewerkzeug ein Werkstückeingriff an demselben Ort normalerweise erst dann wieder stattfindet, wenn zwischenzeitlich auch alle anderen Zahnlücken entsprechend vorgeformt wurden.

Letzteres Vorgehen liefert im allgemeinen bessere Ergebnisse als wenn mehr als einmal am selben Ort ein Werkstückeingriff stattfände, bevor das Werkstück zum Ort einer weiteren zu erzeugenden Zahnlücke weiterrotiert würde.

Ist die Bearbeitung mittels des ersten Prägewerkzeuges 21 beendet, wird ein zweites Prägewerkzeug 22 in die Arbeitsposition gebracht. Dafür ist, im Beispiel der Figs. 1 und 2, der Werkzeughalter 12 um eine Rotationsachse W rotierbar, die zur Achse Z parallel verläuft. Mit diesem zweiten Prägewerkzeug 22 wird dann wieder, analog zum Vorgehen mit ersten Prägewerkzeug 21, jede entstehende Zahnlücke einmal oder mehrmals bearbeitet. Entsprechend wird mit eventuell weiteren vorgesehenen Prägewerkzeugen vorgegangen, im Beispiel von Figs. 1 und 2 mit den Prägewerkzeugen 23 bis 26.

Die Zustellhülse 19 ist in radialer Richtung (genauer: in x-Richtung) verschiebbar und erlaubt so, die radiale Zustelltiefe von (in der Arbeitsposition befindlichen) Prägewerkzeugen einzustellen, was sich einerseits empfiehlt, wenn von einem Prägewerkzeug zu einem anderen Prägewerkzeug gewechselt wird, und/oder andererseits empfiehlt, wenn ein und dasselbe Prägewerkzeug ein weiteres mal am gleichen Ort mit dem Werkstück in Eingriff kommt bzw. wenn ein Ort einer zu erzeugenden Zahnlücke im Werkstück ein durch ein gleichgeformtes Prägewerkzeug nochmals bearbeitet wird. Die Zustellhülse 19 kann insbesondere angetrieben sein, was zu einer Automatisierbarkeit des Verfahrens beitragen kann.

Die Form des letzten Prägewerkzeuges (Nr. 26 im Falle von Figs. 1 und 2) entspricht der Form der zu erzeugenden Zahnlücken der Laufradverzahnung 6. Die Form der anderen Prägewerkzeuge (Nr. 21 bis 25 in Figs. 1 und 2) haben grundsätzlich dieselbe Form, sind aber in der Länge gekürzt (am Werkzeugkopf), und die Reihenfolge des Einsatzes der Prägewerkzeuge erfolgt gemäss zunehmender Länge des entsprechenden Prägewerkzeuges.

Es ist allgemein zu empfehlen, dass jede Zahnlücke mindestens zweimal (oder sogar drei- oder viermal) durch ein Prägewerkzeug ("letztes Prägewerkzeug"; Nr. 26 im Falle von Figs. 1 und 2) bearbeitet wird, dessen Form der Form der zu erzeugenden Zahnlücken der Laufradverzahnung 6 entspricht. Dadurch kann eine besonders hohe Präzision der Laufradverzahnung erreicht werden, und nachfolgende nachformende Arbeitsschritte können dadurch in den meisten Fällen überflüssig werden.

Die Hubbewegung des Werkzeughalters 12 zur Erzeugung der oszillierenden Bewegung der Prägewerkzeuge kann mittels eines Exzenters erzeugt werden. Alternativen zum Exzenter sind beispielsweise ein Kurbelantrieb oder eine Kulisse. Das Prägen des Werkstücks durch die Prägewerkzeuge findet durch Anwendung von Zugkräften statt. Es ist aber auch denkbar, die Anordnung so abzuwandeln, dass für das Prägen Zugkräfte verwendet werden. Bei Doppelhubverfahren können gut sowohl Zug- als auch Schubkräfte zum Einsatz kommen, und zwar abwechselnd.

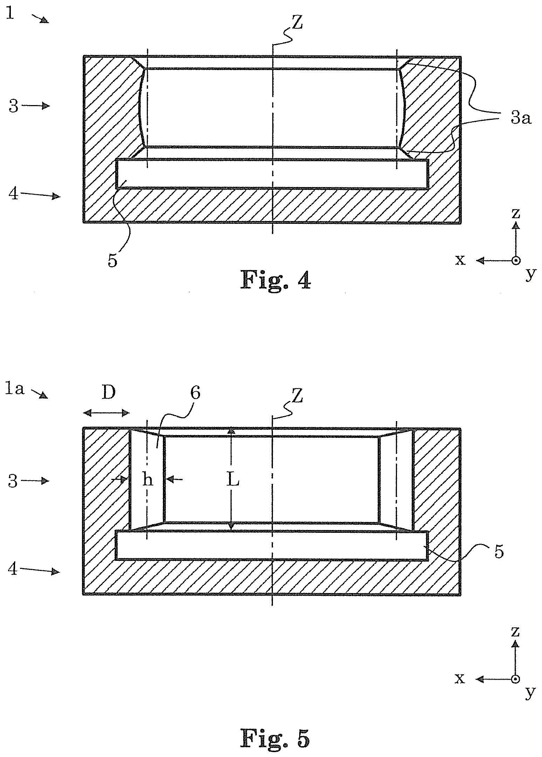

Der Werkstückhalter 10, durch den die Rotationsbewegung des Werkstücks 1 vermittelt wird, weist im Falle des in Figs. 1 und 2 dargestellten Beispiels einen Werkstückaufnehmer 11 auf, durch den das Werkstück radial umfasst ist, wobei "radial" sich in der vorliegenden Patentanmeldung stets auf die Achse Z bezieht, also darauf senkrecht stehende Richtungen bezeichnet. Werkstückhalter 10 ohne einen solchen Werkstückaufnehmer 11 sind aber auch denkbar. Insbesondere können topfförmig ausgebildete Werkstücke 1, wie das in Figs. 1 und 2 dargestellte, z.B. im Bereich des Topfbodens (Bodenteil 4, vgl. Figs. 4 und 5) gehalten werden. Das in Figs. 1 und 2 dargestellte Werkstück 1 ist zwar topfförmig ausgebildet, es ist aber auch möglich, anders geformte Werkstücke zu bearbeiten, beispielsweise solche, die im wesentlichen rohrförmig sind (und kein Bodenteil aufweisen).

Das Werkstück 1 (oder genauer - in dem dargestellten Fall mit dem Werkstückaufnehmer 11 - der Werkstückaufnehmer 11) wirkt mit einem

Gegenhalter 15a zusammen, so dass das Werkstück 1 (und der Werkzeughalter 10) während des Prägevorgangs im wesentlichen ortsfest bleibt. Um die (intermittierende) Rotation des Werkstücks 1 zu ermöglichen oder zumindest zu vereinfachen, wird der Gegenhalter 15a zwischen zwei Werkzeugeingriffen vom Werkstück 1 vorzugsweise wegbewegt und dann wieder mit dem Werkstück 1 in Kontakt gebracht (versinnbildlicht durch den Doppelpfeil in Fig. 2). Insbesondere bei ausreichend dickwandigen Werkstücken 1 kann ggf. auf Gegenhalter verzichtet werden.

Die Vorrichtung kann einen Antrieb für die oszillierende Bewegung des Werkzeughalters 12 bzw. von Prägewerkzeugen 21, 22,...und einen Antrieb für die (ggf. intermittierende) Rotation des Werkstückhalters 10 (bzw. des Werkstücks 1) aufweisen, und insbesondere kann auch eine Synchronisationsvorrichtung zur Synchronisation dieser Bewegungen vorgesehen sein, wobei diese insbesondere eine elektronische Synchronisationsvorrichtung sein kann. Weiter kann ein Antrieb für den Werkzeughalter 12 vorgesehen werden, mittels dessen Prägewerkzeuge in die Arbeitsposition gebracht werden können, sei es durch eine rotierende oder durch eine lineare oder sonstige Bewegung. Dieser Antrieb kann ein separater Antrieb sein und, zur Synchronisation mit mindestens einer der anderen Bewegungen, mit der Synchronisationsvorrichtung wirkverbunden sein. Und schliesslich kann, für bestimmte Ausführungsformen (siehe dazu auch die "zweite Möglichkeit" weiter unten in der Beschreibung) noch ein Antrieb vorgesehen sein, mittels dessen eine längsachsenparallele Bewegung des Werkstückhalters erzeugbar ist, wobei diese lineare Bewegung mit der Werkstückrotation synchronisiert sein kann, z.B. über die genannte Synchronisationsvorrichtung.

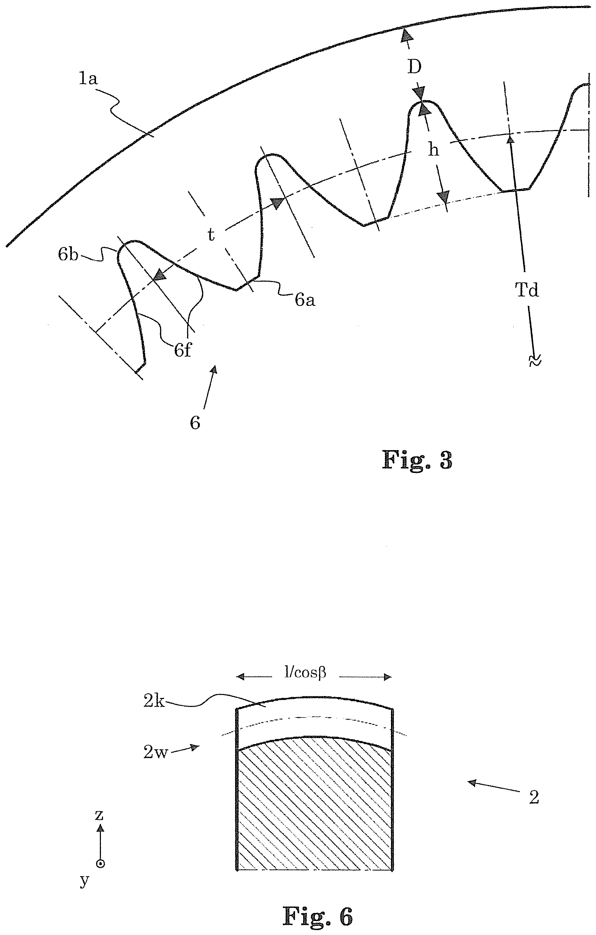

Fig. 3 zeigt ein Detail eines zur Achse Z senkrechten Schnitts durch ein Hohlrad 1a mit Laufradverzahnung 6 (Evolventenverzahnung). Vorzugsweise werden dickwandige Hohlräder in der beschriebenen Weise erzeugt, das heisst, dass eine Restwandstärke D des Hohlrades 1a ein gewisses Mindestverhältnis zu der Verzahnungstiefe h der Verzahnung hat. Die Zahnlücken der Verzahnung 6 weisen Zahnköpfe 6a und Zahnböden 6b sowie Zahnflanken 6f auf. Die Teilung t und der Teilkreisdurchmesser Td sind ebenfalls in Fig. 3 eingezeichnet.

Es gibt mindestens zwei Möglichkeiten, wie die Zahnlücken erzeugbar sind. In einer ersten Möglichkeit sind die Prägewerkzeuge mindestens so lang wie die zu erzeugenden Zahnlücken (beides selbstverständlich verzahnunngsparallel im Wirkbereich gemessen), und die axiale Koordinate des Werkstücks 1 bleibt während der Durchführung des Verfahrens im wesentlichen konstant (relativ zu in der Arbeitsposition befindlichen Prägewerkzeugen). Von einem Werkzeugeingriff zum nächsten Werkzeugeingriff in dieselbe Zahnlücke (der normalerweise nach einer ganzen Umdrehung des Werkstücks 1 erfolgt, aber allenfalls auch schon nach einer halben, siehe die weiter unten beschriebenen Doppelhubverfahren), wird jede der Zahnlücken immer tiefer, bis schliesslich eine vorgegebene Soll-Verzahnungstiefe h erreicht ist.

In einer zweiten Möglichkeit hat ein in der Arbeitsposition befindliches Prägewerkzeug bei allen Eingriffen (allenfalls abgesehen von einer Anfangs- und/oder von einer EndPhase) dieselbe Zustelltiefe (im Falle des letzten Prägewerkzeuges entsprechend der vorgegebene Soll-Verzahnungstiefe), aber mit fortschreitendem Verfahren werden die Zahnlücken immer weiter entlang der Verzahnungsrichtung ausgebildet, bis schliesslich eine vorgegebene verzahnte Länge erreicht ist. Dies wird dadurch erreicht, dass mit fortschreitendem Verfahren das Werkstück relativ zu der axialen Position (z-Position) von in Arbeitspostion befindlichen Prägewerkzeugen in axiale Richtung bewegt wird (zusätzlich zur variierenden bzw. intermittierenden Rotation). In dem in Figs. 1 und 2 gezeigten Fall wird also, bei Durchführung des Verfahrens nach der zweiten Möglichkeit, das Werkstück 1 (einschliesslich Werkstückhalter 10) während des Verfahrens in z-Richtung verschoben; dies kann kontinuiertlich oder schrittweise erfolgen. Ein nächstes Prägewerkzeug wird erst dann eingesetzt, wenn eine Bearbeitung mit einem vorherigen Prägewerkzeug über die ganze Verzahnungslänge beendet ist.

Mit beiden Möglichkeiten können die gleichen Verzahnungen erstellt werden. Bei der zweiten Möglichkeit kann für ein optimales Ergebnis aber noch eine Nachbearbeitung vorteilhaft sein. Durch diese wird eine bessere (weniger rauhe) Oberfläche erreicht. Eine solche Kalibrierung kann durch das Verfahren gemäss der beschriebenen ersten Möglichkeit erfolgen. Es ist aber auch beispielsweise möglich, eine Hon-Operation mittels Honrädern dafür einzusetzen.

Fig. 4 zeigt ein topfförmiges Werkstück 1 in einem Schnitt durch die Längsachse Z. Werkstück 1 weist einen rohrförmigen Abschnitt 3 (Topfwandung) und ein Bodenteil 4 (Topfboden) auf. Die Verzahnung ist in dem rohrförmigen Abschnitt 3 auszubilden.

Wird die oben beschriebene erste Möglichkeit verwendet, und ist - wie gewöhnlich - eine Zylinderverzahnung zu erzeugen, so hat es sich als vorteilhaft erwiesen, die Innenseite des rohrförmigen Abschnittes 3 konkav auszubilden, was in Fig. 4 übertrieben stark dargestellt ist. Dies führt zu besseren Ergebnissen, als wenn die Innenseite des rohrförmigen Abschnittes 3 zylindrisch wäre. Auch bei der oben beschriebenen zweiten Möglichkeit kann eine derartige Ausbildung des rohrförmigen Abschnittes 3 vorteilhaft sein. Um die Verzahnung korrekt ausbilden zu können, ist ein Einstich 5 vorgesehen, der es ermöglicht, das mindestens eine Prägewerkzeug axial so weit in das Werkzeug 1 einzuführen, dass die Verzahnung auf die gesamte geforderte Länge erzeugt werden kann. Ausserdem ist an den Enden des rohrförmigen Abschnittes, in dem die Laufradverzahnung einzubringen ist, jeweils eine Abschrägung 3a vorgesehen.

Fig. 5 zeigt ein Hohlrad 1a, gefertigt aus dem Werkstück 1 gemäss Fig. 4 nach einer der beschriebenen Möglichkeiten, in einem Schnitt durch die Längsachse Z. Die Verzahnung 6 hat die angegebene Verzahnungstiefe h und die angegebene verzahnte Länge L.

Es können insbesondere bombierte Prägewerkzeuge vorgesehen werden. Die Bombierung kann insbesondere in radialer Richtung vorgesehen sein.

Fig. 6 veranschaulicht Bombierung in radialer Richtung und zeigt schematisch ein Prägewerkzeug 2 in einem verzahnungsparallelen Schnitt (entsprechend einem Längsschnitt durch das Prägewerkzeug), wie es mit Vorteil zur Erzeugung einer Schrägverzahnung durch ein Verfahren gemäss der genannten ersten und/oder zweiten Möglichkeit eingesetzt wird. Es wurde festgestellt, dass es zur Erzielung guter Ergebnisse vorteilhaft sein kann, eine konvexe (und somit nicht gerade) Ausbildung des Prägewerkzeuges 2 vorzusehen, insbesondere, wobei die Krümmung des Prägewerkzeuges 2 zumindest im wesentlichen einen Ellipsenabschnitt beschreibt, wobei ein Kreis auch eine Ellipse darstellt. Die in Fig. 6 dargestellte Krümmung ist gegenüber typischen Krümmungen überhöht dargestellt. Die Krümmung liegt im Bereich des Werkzeugkopfes 2k vor, der einen Teil des Wirkbereiches 2w bildet.

Oberhalb des Prägewerkzeuges 2 ist noch die verzahnungsparallele Ausdehnung des Prägewerkzeuges 2 angegeben. Diese ist in Abhängigkeit vom Schrägungswinkel β angegeben (wobei β = 0° sein kann). Wie oben bereits angegeben, sollte in einem Verfahren gemäss der ersten und allenfalls auch der zweiten Möglichkeit die verzahnungsparallele Ausdehnung des mindestens einen Prägewerkzeugs grösser sein als die Zahnlückenlänge L/cosβ der Verzahnung 6. Dies drückt sich aus in 1/cosβ > L/cosβ bzw. in 1 > L, wobei 1 die achsenparallele Länge des Prägewerkzeuges angibt und L die (achsenparallele) Verzahnungslänge im Werkstück.

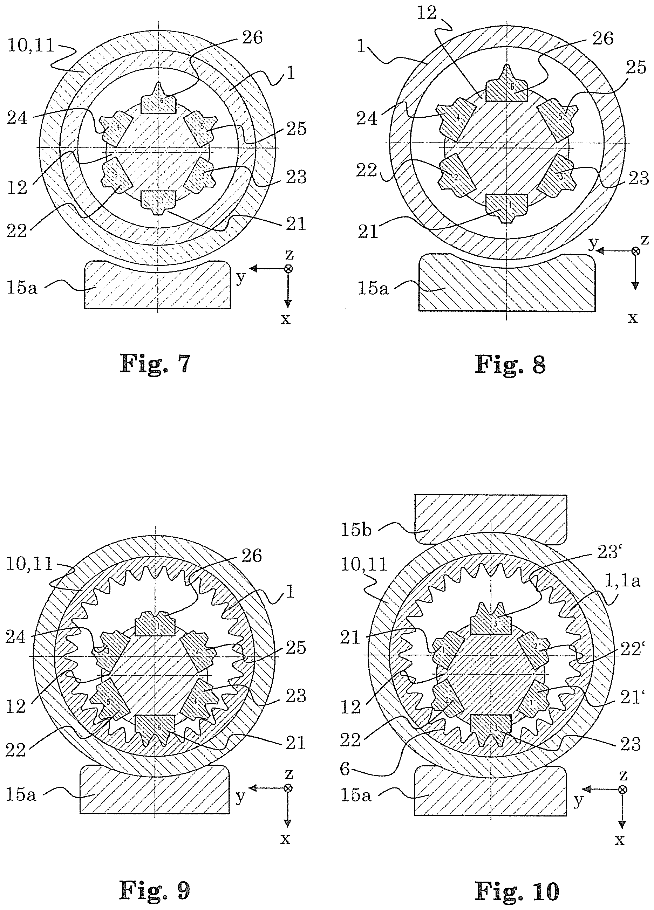

Fig. 7 zeigt ein Detail zur Illustration einer Anordnung mit Werkzeugaufnehmer 11, in einem Anfangszustand, in einem zur Längsachse Z des Werkstücks senkrechten Schnitt. In diesem Zustand ist das Werkstück 1 noch unbearbeitet, und der Gegenhalter 15a ist noch nicht mit dem Werkzeugaufnehmer 11 in Kontakt.

Fig. 8 zeigt ein Detail zur Illustration einer Anordnung ohne einen Werkzeugaufnehmer, in einem Anfangszustand, in einem zur Längsachse Z des Werkstücks senkrechten Schnitt. In diesem Zustand ist das Werkstück 1 noch unbearbeitet, und das Werkstück 1 ist noch nicht mit dem Werkzeugaufnehmer 11 in Kontakt.

Anstelle der hier dargestellten sechs verschiedenen Prägewerkzeuge können auch drei oder vier oder fünf oder allenfalls auch sieben oder acht oder noch mehr Prägewerkzeuge vorgesehen werden. Das hängt z.B. davon ab, wie tief die Verzahnung sein soll, vom Material des Werkstücks und, zumindest in der dargestellten revolverartigen Anordnung von Prägewerkzeugen auf dem Werkzeughalter, von geometrischen Gegebenheiten, insbesondere davon, wieviele Prägewerkzeuge innerhalb des Werkstückes Platz finden.

Anstelle eines revolverartigen, mit einer Trommel versehenen Werkzeughalters (vgl. Figs. 1, 2), der zum Einbringen von Prägewerkzeugen in die Arbeitsposition rotiert wird, kann beispielsweise auch ein Werkzeughalter vorgesehen werden, der linear (parallel zur Achse W) verschiebbar ist. Auf einem solchen Werkzeughalter, der beispielsweise einen balkenförmigen Teil aufweist, können Prägewerkzeuge an bzgl. ihrer Längsachsenkoordinate verschiedenen Orten angeordnet sein. Und eine Kombination von linearer und rotierender Bewegung zum Einbringen von Prägewerkzeugen in die Arbeitsposition ist auch möglich, wobei dann Prägewerkzeuge über den Umfang verteilt und bzgl. ihrer Längsachsenkoordinate verteilt an dem Werkzeughalter angeordnet sein können.

In den oben geschilderten Verfahren und Vorrichtungen weisen die Prägewerkzeuge im Wirkbereich 2w (vgl. Fig. 6) eine Form auf, die der Form einer zu erzeugenden Zahnlücke entspricht oder einem Teil dessen entspricht, der, im Bereich des Prägewerkzeugkopfes 2k gekürzt ist.

Es ist aber auch möglich, vorzusehen, dass die Form der Prägewerkzeuge im Wirkbereich 2w (vgl. Fig. 6) der Form zweier nebeneinanderliegender zu erzeugenden Zahnlücken entspricht oder einem Teil dessen entspricht, der im Prägewerkzeugkopfbereich gekürzt ist. Fig. 9 illustriert schematisch ein entsprechendes Verfahren und eine entsprechende Vorrichtung.

In Fig. 9 sind sechs verschiedene solche doppelzahnige Prägewerkzeuge vorgesehen, die wie weiter oben für einzelzahnige Prägewerkzeuge beschrieben, nacheinander vom kürzesten (Nr. 21 in Fig. 9) zum längesten (Nr. 26 in Fig. 9) eingesetzt werden. Eine Verwendung doppelzahniger Prägewerkzeuge kann besonders vorteilhaft sein, wenn Verzahnungen mit besonders langen Zähnen (Hochverzahnungen) zu erzeugen sind und/oder wenn eine besonders hohe Präzision erreicht werden soll. Bei doppelzahnigen Prägewerkzeugen sollte beim Entwurf des Werkzeughalters besonders gut darauf geachtet werden, dass Prägewerkzeuge, die sich nicht in der Arbeitsposition befinden, nicht (ungewollt) mit dem Werkstück 1 in Kontakt kommen.

Das Verfahren mit doppelzahnigen Prägewerkzeugen kann ansonsten so durchgeführt werden, wie oben dargelegt. Dabei wird normalerweise auch um jeweils nur eine Teilung gedreht, so dass zwei aufeinanderfolgende Zahnlücken von dem doppelzahnigen Prägewerkzeug zweimal nacheinander bearbeitet werden: erst durch den einen und dann durch den anderen Zahn des Prägewerkzeuges.

In dem oben geschilderten Verfahren befindet sich zu jedem Zeitpunkt höchstens genau eines der Prägewerkzeuge in der Arbeitsposition. Und pro einer Periode der oszillierenden Bewegung findet genau ein Eingriff des in der Arbeitsposition befindlichen Prägewerkzeuges in das Werkstück 1 statt. Ein Eingriff ins Werkstück findet also nur mit Kraftwirkung in ein und dieselbe Richtung statt, in den Figs. 1 und 2 nur in Richtung der positiven x-Achse. Ein solches Verfahren kann darum als Einzelhubverfahren bezeichnet werden.

Alternativ ist es aber auch möglich, pro einer Periode der oszillierenden Bewegung genau zwei Eingriffe von in der Arbeitsposition befindlichen Prägewerkzeugen in das Werkstück 1 stattfinden zu lassen. In diesem Fall, der auch als Doppelhubverfahren bezeichnet werden kann, sind normalerweise zwei Prägewerkzeuge in der Arbeitsposition (während andere Prägewerkzeuge in die Arbeitsposition gebracht werden, ist temporär keines in der Arbeitsposition), und zwar typischerweise an bzgl. der Achse W spiegelbildlichen Positionen. Und diese beiden, einander gegenüberliegend angeordneten Prägewerkzeuge sind typischerweise gleich geformt. Wenn also insgesamt N Prägewerkzeuge vorgesehen sind, bilden diese M = N/2 Paare gleichgeformter Prägewerkzeuge. Im Falle von Doppelhubverfahren kommen jeweils Paare von Prägewerkzeugen nacheinander zum Einsatz.

Fig. 10 zeigt ein Beispiel für eine entsprechende Anordnung mit M = 3. Prägewerkzeuge 21 und 21' bilden ein solches Paar, Prägewerkzeuge 22 und 22' ebenfalls, und Prägewerkzeuge 23 und 23' auch. In positiver x-Richtung kommt in der in Fig. 10 dargestellten Situation, Prägewerkzeug 23 zum Einsatz, und in negativer x-Richtung Prägewerkzeug 23'. In Doppelhubverfahren können sinnvollerweise zwei Gegenhalter 15a, 15b verwendet werden, wie in Fig. 1 illustriert. Mit Doppelhubverfahren können besonders hohe Fertigungsgeschwindigkeiten erreicht werden.

Desweiteren sind die in Fig. 10 dargestellten zuerst eingesetzten Prägewerkzeuge 21, 21', 22, 22' einzelzahnige Prägewerkzeuge (wie in Figs. 1 und 2), und die zuletzt eingesetzten Prägewerkzeuge 23, 23' sind doppelzahnige Prägewerkzeuge (wie in Fig. 9). Durch die Verwendung eines doppelzahnigen Prägewerkzeuges als letztes eingesetztes Prägewerkzeug kann, auch im Einzelhubverfahren, eine vergrössere Genauigkeit der erzeugten Verzahnung erreicht werden, auch wenn davor einzelzahnige Werkzeuge verwendet wurden.

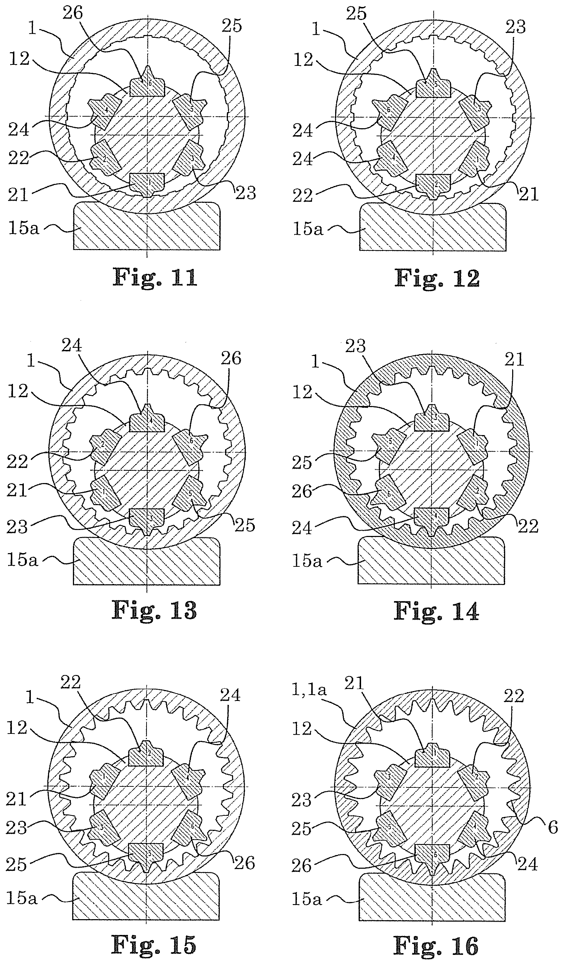

Fig. 11 bis 16 dienen der Illustration eines Verlaufs eines Einzelhub-Verfahrens mit einzahnigen Prägewerkzeugen. Nach einem Anfangszustand (siehe Fig. 8) wird das Werkstück zuerst mit dem Prägewerkzeug 21, das dem (in der Arbeitsposition radial) kürzesten Wirkbereich aufweist, bearbeitet, siehe Fig. 11. Der Ort jedes zu erzeugenden Zahnes wird einmal oder mehrmals prägend durch Prägewerkzeug 21 bearbeitet, bevor zum zweiten Prägewerkzeug 22 gewechselt wird. Vorher findet kein Wechsel eines weiteren der Prägewerkzeuge in die Arbeitsposition statt. Dann wird das Werkstück 1 durch Prägewerkzeug 22 bearbeitet, usw. So kommen nach und nach die immer längeren Prägewerkzeuge zum Einsatz, bis schliesslich, in Fig. 16, das sechste und letzte Prägewerkzeug 26 verwendet wird.

Auf diese Weise entsteht durch eine Vielzahl aufeindanderfolgender einzelner Prägeschritte die zu erzeugende Laufradverzahnung 6, siehe Fig. 16.

Getriebe, beispielsweise für Kraftfahrzeuge, können unter Verwendung der beschriebenen Verfahren zur Herstellung von Hohlrädern mit innenliegenden Laufradverzahnungen hergestellt werden. Solche Getriebe weisen mindestens ein entsprechendes Hohlrad auf und profitieren von den entsprechenden Vorteilen.

## Patentansprüche

1. Verfahren zur Herstellung eines mit einer innenliegenden Laufradverzahnung (6) versehenen Hohlrades (1a), wobei ein Werkstück (1), das einen rohrförmigen Abschnitt (3) mit einer Längsachse (Z) aufweist, durch welche der im folgenden gebrauchte Begriff radial definiert ist, durch N ≥ 2 Prägewerkzeuge (2,21,21',22,22'), von denen jedes während der Durchführung des Verfahrens in eine Arbeitsposition gebracht wird, zur Erzeugung der Laufradverzahnung (6) an der Innenseite des rohrförmigen Abschnittes (3) bearbeitet wird, indem das Werkstück (1) eine Rotationsbewegung mit zeitlich variierender Rotationsgeschwindigkeit um die genannte Längsachse (Z) durchführt und jeweils das mindestens eine in der Arbeitsposition befindliche Prägewerkzeug (2,21,21',22,22') radial oszillierende Bewegungen durchführt, die mit der genannten Rotationsbewegung synchronisiert sind, so dass das genannte mindestens eine in der Arbeitsposition befindliche Prägewerkzeug (2,21,21',22,22') das Werkstück (1) wiederholt, insbesondere periodisch bearbeitet, und wobei mindestens zwei der N Prägewerkzeuge verschieden geformte Wirkbereiche (2w) aufweisen, insbesondere wobei
- jedes der N Prägewerkzeuge (2,21,21',22,22') einen anders geformten Wirkbereich (2w) aufweist; oder
- M ≥ 2 eine ganze Zahl mit N = 2M ist und die N Prägewerkzeuge (2,21,21',22,22') M Paare von Prägewerkzeugen mit im wesentlichen gleich geformten Wirkbereichen (2w) bilden und die Wirkbereiche (2w) von verschiedenen der M Paare von N Prägewerkzeugen verschieden geformt sind.

2. Verfahren gemäss Anspruch 1, wobei die verschieden geformten Wirkbereiche (2w) der Prägewerkzeuge (2,21,21',22,22') sich in ihrer Länge in radialer Richtung, gemessen in der Arbeitsposition, unterscheiden, insbesondere wobei eine zeitliche Reihenfolge, in der die Prägewerkzeuge (2,21,21',22,22') in die Arbeitsposition gebracht werden, durch die Reihenfolge gegeben ist, die sich ergibt, wenn die N Prägewerkzeuge aufsteigend gemäss der genannten Länge sortiert werden.

3. Verfahren gemäss einem der vorangegangenen Ansprüche, wobei die N Prägewerkzeuge (2,21,21',22,22') durch einen Werkzeughalter (12) gehaltert werden, wobei der Werkzeughalter (12) zu einer Bewegung angetrieben wird, durch die Prägewerkzeuge (2,21,21',22,22') in die Arbeitsposition gebracht werden können.

4. Verfahren gemäss Anspruch 3, wobei der Werkzeughalter (12) eine Trommel aufweist, auf deren Umfang die Prägewerkzeuge (2,21,21',22,22') angeordnet sind.

5. Verfahren gemäss einem der vorangegangenen Ansprüche, wobei mindestens eines der N Prägewerkzeuge (2,21,21',22,22') einen Wirkbereich (2w) aufweist, dessen Zahnprofil dem Profil zweier benachbarter Zahnlücken der zu erzeugenden Laufradverzahnung (6) im wesentlichen entspricht, insbesondere wobei jedes der N Prägewerkzeuge (2,21,21',22,22') einen Wirkbereich (2w) aufweist, dessen Zahnprofil dem Profil zweier benachbarter Zahnlücken der zu erzeugenden Laufradverzahnung (6) im wesentlichen entspricht.

6. Verfahren gemäss einem der vorangegangenen Ansprüche, wobei das genannte mindestens eine in der Arbeitsposition befindliche Prägewerkzeug (2,21,21',22,22') das Werkstück (1) in solchen Phasen der Rotationsbewegung bearbeitet, in denen das Werkstück (1) zumindest momentan stillsteht, insbesondere wobei die Rotationsbewegung des Werkstücks (1) eine intermittierende Rotation ist, und wobei das genannte mindestens eine in der Arbeitsposition befindliche Prägewerkzeug das Werkstück (1) in Phasen des Rotationsstillstandes des Werkstückes (1) bearbeitet.

7. Verfahren gemäss einem der vorangegangenen Ansprüche, wobei entweder
c) zunächst ein erstes der N Prägewerkzeuge (2,21,21',22,22') in die Arbeitsposition gebracht wird und dann nacheinander die weiteren der N Prägewerkzeuge, bis zum N-ten Prägewerkzeug, wobei jedes der N Prägewerkzeuge mindestens solange in der Arbeitsposition verbleibt, bis jede entstehende Zahnlücke der zu erzeugenden Laufradverzahnung mindestens einmal, insbesondere mindestens zweimal, durch das jeweilige in der Arbeitsposition befindliche Prägewerkzeug bearbeitet wurde, insbesondere wobei sämtliche der N Prägewerkzeuge (2,21,21',22,22') verschieden geformte Wirkbereiche aufweisen;
oder
d) M ≥ 2 eine ganze Zahl mit N = 2M ist und die N Prägewerkzeuge (2,21,21',22,22') M Paare von Prägewerkzeugen mit im wesentlichen gleich geformten Wirkbereichen (2w) bilden und zunächst ein erstes Paar der M Paare von Prägewerkzeugen in die Arbeitsposition gebracht wird und dann nacheinander die weiteren der M Paare von Prägewerkzeugen, bis zum M-ten Paar der Prägewerkzeuge, wobei jedes der M Paare der Prägewerkzeuge mindestens solange in der Arbeitsposition verbleibt, bis jede entstehende Zahnlücke der zu erzeugenden Laufradverzahnung (6) mindestens einmal, insbesondere mindestens zweimal, durch mindestens eines der zwei, insbesondere durch beide der zwei in der Arbeitsposition befindlichen Prägewerkzeuge des jeweiligen Paares von Prägewerkzeugen bearbeitet wurde, insbesondere wobei sämtliche der M Paare von Prägewerkzeugen verschieden geformte Wirkbereiche (2w) aufweisen.

8. Verfahren gemäss einem der vorangegangenen Ansprüche, wobei
- N ≥ 4 gilt und sämtliche der N Prägewerkzeuge (2,21,21',22,22') verschieden geformte Wirkbereiche (2w) aufweisen; oder
- M ≥ 3 eine ganze Zahl mit N = 2M ist und die N Prägewerkzeuge (2,21,21',22,22') M Paare von Prägewerkzeugen mit im wesentlichen gleich geformten Wirkbereichen (2w)bilden.

9. Verfahren gemäss einem der vorangegangenen Ansprüche, wobei das Hohlrad (1a) topfförmig ausgebildet ist mit einem an den rohrförmigen Abschnitt (3) anschliessenden Bodenteil (4), insbesondere, wobei der rohrförmige Abschnitt (3) mit dem Bodenteil (4) einstückig ausgebildet ist.

10. Verfahren gemäss einem der vorangegangenen Ansprüche, wobei das Verfahren so durchgeführt wird, dass in einer Vielzahl von Umläufen der Rotation des Werkstückes (1) durch die periodische Bearbeitung des Werkstücks (1) durch die Prägewerkzeuge (2,21,21',22,22') eine immer tiefere Ausbildung der Zahnlücken der Laufradverzahnung (6) erzeugt wird, bis eine vorgegebene Verzahnungstiefe und -form der Laufradverzahnung (6) erreicht ist.

11. Verfahren gemäss einem der vorangegangenen Ansprüche, wobei jedes der N Prägewerkzeuge (2,21,21',22,22') in Richtung der Zahnlücken länger ist als Zahnlücken der zu erzeugenden Laufradverzahnung (6).

12. Verfahren gemäss einem der vorangegangenen Ansprüche, wobei jedes der Prägewerkzeuge (2,21,21',22,22') mindestens einen Wirkbereich (2w) aufweist, der einen Werkzeugkopf (2k) und Werkzeugflanken (2f) umfasst, und wobei ein Werkzeugkopf (2k) mindestens eines der Prägewerkzeuge (2,21,21',22,22'), insbesondere aller N Prägewerkzeuge konvex ausgebildet ist, insbesondere wobei der genannte Werkzeugkopf (2k) in einem Schnitt symmetrisch zwischen an den Werkzeugkopf (2k) angrenzenden Werkzeugflanken (2f) eine konvexe Form, insbesondere einen Ellipsenabschnitt beschreibt.

13. Verfahren zur Herstellung eines Getriebes, das ein mit einer innenliegenden Laufradverzahnung (6) versehenes Hohlrad (1a) aufweist, wobei das Hohlrad (1a) gemäss einem der vorangegangenen Verfahren hergestellt wird.

14. Vorrichtung zur Herstellung von mit einer innenliegenden Laufradverzahnung (6) versehenen Hohlrädern (1a), aufweisend
- einen um seine Längsachse (Z) rotierbaren Werkstückhalter (10) zur Halterung eines Werkstückes (1) mit einem entlang der Längsachse (Z) ausgerichteten rohrförmigen Abschnitt (3), derart, dass der rohrförmige Abschnitt (3) an seiner Innenseite bearbeitbar ist;
- einen Antrieb für die Rotation des Werkstückhalters (10), der ausgelegt ist zur Erzeugung einer Rotation mit zeitlich variierender Rotationsgeschwindigkeit, insbesondere einer intermittierenden Rotation;
- einen Werkzeughalter (12) zum Halten von N ≥ 2, insbesondere N ≥ 4 Prägewerkzeugen (2,21,21',22,22'), von denen mindestens zwei verschieden geformte Wirkbereiche (2w) aufweisen, wobei mittels des Werkzeughalters (12) jedes der N Prägewerkzeuge in eine Arbeitsposition gebracht werden kann, und der zum Durchführen einer radial zu der Längsachse (Z) verlaufenden linear oszillierenden Bewegung antreibbar ist, so dass der rohrförmige Abschnitt (3) an seiner Innenseite durch ein in der Arbeitsposition befindliches Prägewerkzeug (2,21,21',22,22') wiederholt, insbesondere periodisch bearbeitbar ist;
- einen Antrieb für ein Antreiben des Werkzeughalters (12) zu einer Bewegung, durch die die Prägewerkzeuge (2,21,21',22,22') in die Arbeitsposition gebracht werden können;
- eine Synchronisationsvorrichtung zur Synchronisation einer mittels des Antriebs für die Rotation des Werkstückhalters (10) erzeugbaren Rotation des Werkstückhalters (10) mit der radial zu der Längsachse (Z) verlaufenden linear oszillierenden Bewegung des Werkzeughalters (12).

15. Verwendung einer Vorrichtung gemäss Anspruch 14 zum Erstellen einer innenliegenden Laufradverzahnung (6) in einem Hohlrad (1a), insbesondere zum Erstellen einer innenliegenden Laufradverzahnung (6) in einem Hohlrad (1a) eines Getriebes, insbesondere eines Kraftfahrzeug-Automatikgetriebes.

## Claims

1. Method for manufacturing a hollow wheel (1a) having an internal gear toothing (6), wherein a work-piece (1), which comprises a tubular section (3) with a longitudinal axis (Z), by which the term radial used in the following is defined, is processed by N ≥ 2 stamping tools (2,21,21',22,22'), of which each one during the implementation of the method is brought into a working position, for the production of the gear toothing (6) on the inside of the tubular section (3), in that the work-piece (1) carries out a rotating movement with a rotating speed varying over time about said longitudinal axis (Z) and wherein the respecive at least one stamping tool (2,21,21',22,22') in the working position carries out radially oscillating movements, which are synchronised with said rotating movement, so that said at least one stamping tool (2,21,21',22,22') in the working position processes the work-piece repeatedly, in particular periodically, and wherein at least two of the N stamping tools comprise differently shaped working regions (2w), in particular wherein
- each of the N stamping tools (2,21,21',22,22') comprises a differently shaped working region (2w); or
- M ≥ 2 is an integer with N = 2M, and the N stamping tools (2,21,21',22,22') form M pairs of stamping tools with essentially identically shaped working regions (2w), and the working regions (2w) of different ones of the M pairs of N stamping tools are differently shaped.

2. Method in accordance with claim 1, wherein the differently shaped working regions (2w) of the stamping tools (2,21,21',22,22') differ with respect to their length in radial direction, measured in the working position, in particular wherein a time sequence, in which the stamping tools (2,21,21',22,22') are brought into the working position, is given by the sequence, which results, when the N stamping tools are sorted in a rising sequence in accordance with said length.

3. Method in accordance with one of the preceding claims, wherein the N stamping tools (2,21,21',22,22') are held by a tool holder (12), wherein the tool holder (12) is driven to accomplish a movement, by means of which the stamping tools (2,21,21',22,22') can be brought into the working position.

4. Method in accordance with claim 3, wherein the tool holder (2) comprises a drum, on the circumference of which the stamping tools (2,21,21',22,22') are arranged.

5. Method in accordance with one of the preceding claims, wherein at least one of the N stamping tools (2,21,21',22,22') comprises a working region (2w), the tooth profile of which essentially corresponds to the profile of two adjacent tooth gaps of the gear toothing (6) to be produced, in particular wherein each of the N stamping tools (2,21,21',22,22') comprises a working region (2w), the tooth profile of which essentially corresponds to the profile of two adjacent tooth gaps of the gear toothing (6) to be produced.

6. Method in accordance with one of the preceding claims, wherein said at least one stamping tool (2,21,21',22,22') in the working position processes the work-piece (1) in such phases of the rotating movement, in which the work-piece (1) at least momentarily stands still, in particular wherein the rotating movement of the work-piece (1) is an intermitting rotation, and wherein said at least one stamping tool in the working position processes the work-piece in phases of rotation standstill of the work-piece (1).

7. Method in accordance with one of the preceding claims, wherein either
c) initially a first one of the N stamping tools (2,21,21',22,22') is brought into the working position and then one after the other the further N stamping tools, up to the N-th stamping tool, wherein each of the N stamping tools remains in the working position at least until each of the tooth gaps in creation of the gear toothing to be produced has been processed at least once, in particular at least twice, by the respective stamping tool respectively in the working position, in particular wherein all of the N stamping tools (2,21,21',22,22') comprise differently shaped working regions;
or
d) M ≥ 2 is an integer with N = 2M, and the N stamping tools form M pairs of stamping tools (2,21,21',22,22') with essentially identically shaped working regions (2w), and initially, a first pair of the M pairs of stamping tools is brought into the working position and then one after the other, the further ones of the M pairs of stamping tools, up to the M-th pair of the stamping tools, wherein each of the M pairs remains in the working position at least until every tooth gap in creation of the gear toothing (6) to be produced has been processed at least once, in particular at least twice, by at least one of the two, in particular by both of the two stamping tools in the working position of the respective pair of stamping tools, in particular wherein all of the M pairs of stamping tools comprise differently shaped working regions (2w).

8. Method in accordance with one of the preceding claims, wherein
- N ≥ 4 is applicable, and all of the N stamping tools (2,21,21',22,22') comprise differently shaped working regions (2w); or
- M ≥ 3 is an integer with N = 2M, and the N stamping tools form M pairs of stamping tools (2,21,21',22,22') with essentially identically shaped working regions (2w).

9. Method in accordance with one of the preceding claims, wherein the hollow wheel (1a) is pot-shaped with a bottom part (4) adjoining the tubular section (3), in particular wherein the tubular section (3) is integrally formed with the bottom part (4).

10. Method in accordance with one of the preceding claims, wherein the method is implemented in such a manner, that in a multitude of turns of the rotation of the work-piece (1) a deeper and deeper shaping of the tooth gaps of the gear toothing (6) is produced by the periodic processing of the work-piece by the stamping tools (2,21,21',22,22'), until a predefined gearing depth and - shape of the gear toothing (6) is achieved.

11. Method in accordance with one of the preceding claims, wherein each of the N stamping tools (2,21,21',22,22') in the direction of the tooth gaps is longer than tooth gaps of the gear toothing (6) to be produced.

12. Method in accordance with one of the preceding claims, wherein each of the stamping tools (2,21,21',22,22') comprises at least one working region (2w), which comprises a tool head (2k) and tool flanks (2f), and wherein a tool head (2k) of at least one of the stamping tools (2,21,21',22,22'), in particular of all N stamping tools is convex shaped, in particular wherein said tool head (2k) in a section symmetrically between tool flanks (2f) adjacent to the tool head (2k) describes a convex shape, in particular an ellipse section.

13. Method for producing a gearing, which comprises a hollow wheel equipped with an internal gear toothing (6), wherein the hollow wheel (1a) is produced in accordance with one of the preceding methods.

14. Apparatus for producing hollow wheels equipped with an internal gear toothing (6), comprising
- A work-piece holder (10) rotatable around its longitudinal axis (Z) for holding a work-piece (1) with a tubular section (3) aligned along the longitudinal axis (Z), in such a manner, that the tubular section (3) can be processed on its inside;
- A drive for the rotation of the work-piece holder (10), which is designed for producing a rotation with a rotation speed varying over time, in particular an intermitting rotation:
- A tool holder (12) for holding N ≥ 2, in particular N ≥ 4 stamping tools (2,21,21',22,22') two of which comprising differently shaped working regions (2w), wherein by means of tool holder (12) each one of the N stamping tools may be brought into a working position, and which can be driven for accomplishing a linearly oscillating movement running radially to the longitudinal axis (Z), such that the tubular section (3) on its inside can be repeatedly, in particularly periodically processed by a stamping tool (2,21,21',22,22') in the working position;
- A drive for driving the tool holder (12) to accomplish a movement by means of which the stamping tools (2,21,21',22,22') can be brought into the working position;
- A synchronisation device for the synchronisation of a rotation of the work-piece holder (10), produceable by means of the drive for the rotation of the work-piece holder (10), with the linear oscillating movement of the tool holder running radially to the longitudinal axis (Z).

15. Use of an apparatus in accordance with claim 14 for producing an internal gear toothing (6) in a hollow wheel (1a), in particular for producing an internal gear toothing (6) in a hollow wheel (1a) of a gearing, in particular of an automatic transmission of a motor vehicle.

## Revendications

1. Procédé de fabrication d'une couronne (1a) dotée d'une denture intérieure (6) de roue de roulement, dans lequel une pièce (1) qui présente une partie tubulaire (3) dotée d'un axe longitudinal (Z) par rapport auquel est défini le terme "radial" utilisé dans ce qui suit, est traité par N ≥ 2 outils de matriçage (2, 21, 21', 22, 22') dont chacun est amené en une position de travail pendant l'exécution du procédé pour former la denture (6) de roue de roulement sur le côté intérieur de la partie tubulaire (3) en faisant exécuter par la pièce (1) un déplacement de rotation autour dudit axe longitudinal (Z) à une vitesse de rotation variable, le ou les outils de matriçage (2, 21, 21', 22, 22') situés dans la position de travail exécutant des déplacements d'oscillation radiale synchronisés par rapport audit déplacement de rotation de telle sorte que ledit ou lesdits outils de matriçage (2, 21, 21', 22, 22') situés en position de travail traitent la pièce (1) de manière répétée et en particulier de manière périodique, au moins deux des N outils de matriçage présentant des zones d'action (2w) de formes différentes, et en particulier
- chacun des N outils de matriçage (2, 21, 21', 22, 22') présentant une zone d'action (2w) de forme différente ou
- M ≥ 2 étant un nombre entier et N = 2M, les N outils de matriçage (2, 21, 21', 22, 22') formant M paires d'outils de matriçage qui présentent des zones d'action (2w) de forme essentiellement identique et les zones d'action (2w) des différentes M paires de N outils de matriçage ayant des formes différentes.

2. Procédé selon la revendication 1, dans lequel les zones d'action (2w) de formes différentes des outils de matriçage (2, 21, 21', 22, 22') diffèrent par leur longueur dans la direction radiale, mesurée en position de travail, et en particulier dans lequel une séquence temporelle au cours de laquelle les outils de matriçage (2, 21, 21', 22, 22') sont amenés dans la position de travail est définie par la séquence obtenue lorsque les N outils de matriçage sont triés de la manière croissante en fonction dudite longueur .

3. Procédé selon l'une des revendications précédentes, dans lequel les N outils de matriçage (2, 21, 21', 22, 22') sont maintenus par un porte-outils (12), le porte-outils (12) étant entraîné en un déplacement par lequel les outils de matriçage (2, 21, 21', 22, 22') peuvent être amenés en leur position de travail.

4. Procédé selon la revendication 3, dans lequel le porte-outils (12) présente un tambour à la périphérie duquel sont disposés les outils de matriçage (2, 21, 21', 22, 22').

5. Procédé selon l'une des revendications précédentes, dans lequel au moins un des N outils de matriçage (2, 21, 21', 22, 22') présente une zone d'action (2w) dont le profil de dent correspond essentiellement au profil de deux creux voisins entre les dents de la denture (6) de roue de roulement à former, et en particulier dans lequel chacun des N outils de matriçage (2, 21, 21', 22, 22') présente une zone d'action (2w) dont le profil de dent correspond essentiellement au profil de deux creux voisins entre les dents de la denture (6) de roue de roulement à former.

6. Procédé selon l'une des revendications précédentes, dans lequel ledit ou lesdits outils de matriçage (2, 21, 21', 22, 22') situés en position de travail traitent la pièce (1) dans des phases du déplacement de rotation au cours desquelles la pièce (1) est au moins momentanément à l'arrêt, et en particulier dans lequel le déplacement de rotation de la pièce (1) est une rotation intermittente, ledit ou lesdits outils de matriçage placés en position de travail traitant la pièce (1) au cours des phases d'arrêt de rotation de la pièce (1).

7. Procédé selon l'une des revendications précédentes, dans lequel
c) au moins un premier des N outils de matriçage (2, 21, 21', 22, 22') est amené en position de travail, les autres des N outils de matriçage l'étant ensuite successivement jusqu'au Nième outil de matriçage, chacun des N outils de matriçage restant en position de travail au moins jusqu'à ce que chaque creux entre les dents de la denture de roue de roulement à former ait été traité au moins une fois et en particulier au moins deux fois par l'outil de matriçage situé en position de travail, et en particulier dans lequel la totalité des N outils de matriçage (2, 21, 21', 22, 22') présente des zones d'action de formes différentes ou
d) M ≥ 2 est un nombre entier, avec N = 2M, et les N outils de matriçage (2, 21, 21', 22, 22') forment M paires d'outils de matriçage qui présentent des zones d'action (2w) de formes essentiellement identiques, une première des M paires d'outils de matriçage étant d'abord amenée en position de travail, les autres des M paires d'outils de matriçage l'étant ensuite successivement jusqu'à la Mième paire d'outils de matriçage, chacune des M paires d'outils de matriçage restant en position de travail jusqu'à ce que chaque creux entre les dents de la denture (6) de roue de roulement à former ait été traité au moins une fois et en particulier au moins deux fois par au moins l'une des deux et en particulier par les deux outils de matriçage placés en position de travail de la paire d'outils de matriçage, et en particulier dans lequel la totalité des M paires d'outils de matriçage présente des zones d'action (2w) de formes différentes.

8. Procédé selon l'une des revendications précédentes, dans lequel
- N ≥ 4 et tous les N outils de matriçage (2, 21, 21', 22, 22') présentent des zones d'action (2w) de formes différentes ou
- M ≥ 3 est un nombre entier avec N = 2M et les N outils de matriçage (2, 21, 21', 22, 22') forment M paires d'outils de matriçage qui présentent des zones d'action (2w) de formes essentiellement identiques.

9. Procédé selon l'une des revendications précédentes, dans lequel la couronne (1a) a la forme d'un chapeau et présente une partie de fond (4) qui se raccorde à la partie (3) de forme tubulaire, la partie tubulaire (3) étant formée d'une seule pièce avec la partie de fond (4).

10. Procédé selon l'une des revendications précédentes, dans lequel le procédé est mis en oeuvre de telle sorte que sur plusieurs tours de rotation de la pièce (1), le traitement périodique de la pièce (1) par les outils de matriçage (2, 21, 21', 22, 22') forme des creux de plus en plus profonds entre les dents de la denture (6) de roue de roulement jusqu'à ce qu'une profondeur et une forme prédéterminées de la denture (6) de roue de roulement soient atteintes.

11. Procédé selon l'une des revendications précédentes, dans lequel dans la direction des creux entre les dents, chacun des N outils de matriçage (2, 21, 21', 22, 22') est plus long que les creux entre les dents de la denture (6) de roue de roulement à former.

12. Procédé selon l'une des revendications précédentes, dans lequel chacun des outils de matriçage (2, 21, 21', 22, 22') présente au moins une zone d'action (2w) qui comporte une tête d'outil (2k) et des flancs d'outils (2f), une tête d'outil (2k) d'au moins l'un des outils de matriçage (2, 21, 21', 22, 22') et en particulier de tous les N outils de matriçage ayant une forme convexe, et en particulier dans lequel ladite tête d'outil (2k) décrit dans une coupe symétrique entre les flancs d'outils (2f) qui délimitent la tête d'outil (2k) une forme convexe et en particulier une section en ellipse.

13. Procédé de fabrication d'une transmission qui présente une couronne (la) dotée d'une denture intérieure (6) de roue de roulement, la couronne (la) étant réalisée selon un des procédés précédents.

14. Dispositif de fabrication de couronnes (la) dotées d'une denture intérieure (6) de roue de roulement, le dispositif présentant
un porte-pièce (10) apte à tourner autour de son axe longitudinal (Z) et maintenant une pièce (1) présentant une partie tubulaire (3) alignée sur l'axe longitudinal (Z) de telle sorte que la partie tubulaire (3) soit traitée sur sa face intérieure,
un entraînement en rotation du porte-pièce (10) conçu pour établir une rotation à vitesse variable, en particulier une rotation intermittente;
un porte-outils (12) qui porte N ≥ 2 et en particulier N ≥ 4 outils de matriçage (2, 21, 21', 22, 22') parmi lesquels au moins deux présentent des zones d'action (2w) de formes différentes, le porte-outils (12) permettant d'amener chacun des N outils de matriçage en une position de travail et pouvant être entraîné en vue d'exécuter un déplacement oscillant linéaire s'étendant radialement par rapport à l'axe longitudinal (Z), de telle sorte que la partie tubulaire (3) puisse être traitée de manière répétée et en particulier périodique sur sa face intérieure par un outil de matriçage (2, 21, 21', 22, 22') placé en position de travail,
un entraînement qui entraîne le porte-outils (12) à se déplacer de telle sorte que les outils de matriçage (2, 21, 21', 22, 22') puissent être amenés en position de travail,
un dispositif de synchronisation pour synchroniser une rotation du porte-pièce (10), obtenue au moyen de l'entraînement en rotation du porte-pièce (10), par rapport au déplacement oscillant linéaire du porte-outils (12) radialement par rapport à l'axe longitudinal (Z).

15. Utilisation d'un dispositif selon la revendication 14 pour former une denture intérieure (6) de roue de roulement et en particulier de former une denture intérieure (6) de roue de roulement d'une transmission et en particulier d'une transmission automatique de véhicule automobile.
